# EUROPEAN PATENT SPECIFICATION

(11) **EP 4 408 368 B1**
(45) Date of publication and mention of the grant of the patent: **21.01.2026**
(21) Application number: 23728431.0
(22) Date of filing: 05.05.2023
(51) Int. Cl.: A61G 5/04, A61G 5/10, B62K 21/24

(54) **AUXILIARY TRACTION DEVICE FOR WHEELCHAIRS FOR THE DISABLED**
HILFSZUGVORRICHTUNG FÜR ROLLSTÜHLE FÜR BEHINDERTE
DISPOSITIF DE TRACTION AUXILIAIRE POUR FAUTEUILS ROULANTS POUR HANDICAPÉS

(30) Priority: 06.05.2022 IT 202200009368
(43) Date of publication of application: 07.08.2024
(73) Proprietor: Klaxon Mobility GmbH, 9601 Arnoldstein (AT)
(72) Inventor: BENEDINI, Antonio, 36048 Barbarano Mossano (VI) (IT)
(74) Representative: Marchioro, Paolo
(86) International application number: PCT/IB2023/054698
(87) International publication number: WO 2023/214372

(56) References cited:
- FR-A- 1 535 022
- US-A- 4 503 925

## Description

The invention relates to an auxiliary traction device for wheelchairs for the disabled.

The invention also relates to some auxiliary traction systems, where each comprises the aforementioned auxiliary traction device associated with a specific accessory device.

Furthermore, the invention relates to a method for fastening the aforementioned auxiliary traction device to a wheelchair for the disabled.

Such a steerable auxiliary traction device for a wheelchair comprising electric drive and connecting and fastening means has been disclosed in US 4,503,925 A.

It is well known that people with motor impairment in their lower limbs need to use special wheelchairs for the disabled in order to be able to move around autonomously, semi-autonomously, or to be moved by a caregiver.

It is equally well known that such wheelchairs for the disabled comprise a frame on which a seat for the disabled person is obtained and to which a pair of main, rear, generally larger wheels and a pair of front, smaller, pivoting wheels are rotatably coupled.

Normally, wheelchairs are provided with handrails associated with the rear wheels, which are available to the disabled person for manually pushing the same wheelchair.

However, disadvantageously, this simple configuration of the manually pushed wheelchair does not make it possible for the disabled person to push the same wheelchair for long distances, or along particularly steep ascents, as the effort required would be excessive and there is a risk of jeopardising one's own safety.

In order to overcome these problems, in the past, motorised wheelchairs for the disabled were developed and placed on the market, i.e. wheelchairs provided with an integrated electric motor, adapted to rotate the rear wheels, a battery-pack to power the aforementioned electric motor, and a control device that can be commanded by the disabled person to control the functionality of the wheelchair.

However, these types of wheelchairs for the disabled have two main drawbacks.

A first acknowledged drawback is that motorised wheelchairs for the disabled are expensive and cost much more than manual wheelchairs.

**In** addition, motorised wheelchairs for the disabled are bulky and certain movements and procedures, that are normally possible with manual wheelchairs, are impossible to make.

For example, with a motorised wheelchair it would be impossible for a disabled person to use the car autonomously and load the wheelchair into it, as is the case with manual folding-type wheelchairs.

**In** order to achieve a compromise between these two solutions, auxiliary traction devices have been developed over the past two decades to be removably coupled, alternatively at the front or at the rear, to manual wheelchairs for the disabled, so as to make the latter motor-driven.

**In** particular, with regard to auxiliary traction devices that can be coupled exclusively to the front of the wheelchair, they usually comprise a tubular column and a steering unit, which in turn comprises a steering tube that can be rotatably inserted into the aforementioned tubular column. At its first end, the steering tube is associated to a wheel and, at its second end, it is associated with steering means, such as a handlebar.

Furthermore, the auxiliary traction systems of the known type comprise motion-generating means, preferably an electric motor with an associated battery-pack, associated with the wheel so as to operate the rotation thereof.

Furthermore, the auxiliary traction devices of the prior art must necessarily comprise a connection assembly in order to achieve a stable and secure connection with the said wheelchair, in a front position relative to the rotation axis of the rear wheels of the wheelchair.

However, such auxiliary traction devices, which are configured to be associated at the front of a wheelchair, are known to be little effective when moving uphill, as the auxiliary traction device/wheelchair assembly remains almost unloaded, to the detriment of grip on the ground.

Alternatively, as mentioned above, there are auxiliary devices configured to be associated with the wheelchair exclusively in the rear position relative to the rotation axis of the rear wheels of the wheelchair. **In** this case, obviously, such auxiliary traction devices do not provide a steering unit that can be actuated by the disabled person, but they comprise a motorised wheel that can be controlled by means of appropriate control devices available to the disabled, such as a joystick, or such devices act with an assisted driving rationale, i.e. when the disabled person manually operates the rear wheels of the wheelchair, this auxiliary device activates, based on the direction and speed of movement imposed by the disabled person, the rotation of the wheel of the device itself, thus facilitating the movement of the wheelchair.

However, this type of auxiliary traction devices also have an important drawback that takes place when the wheelchair is moving downhill. In fact, in such a circumstance the rear auxiliary traction device is not able to adequately brake the wheelchair, as the former is substantially dragged along by the latter. Furthermore, with the rear positioning of the auxiliary traction device, the thrust generated by the electric motor of the latter tends to squash the front wheels of the wheelchair resting on the ground. This, disadvantageously, even in case of very small unevenness of the ground or of small steps, causes the aforementioned front wheels of the wheelchair to catch on such unevenness, preventing the wheelchair from moving forward or even causing it to tip over.

Therefore, it may be stated that, depending on the driving and ground conditions faced by a disabled person, each of the above-mentioned types of auxiliary traction devices have certain drawbacks compared to the other types. In relation to this, a further drawback of all the above-mentioned types of auxiliary traction devices is that each of them is designed to be coupled to a wheelchair in only one specific position, and thus each of these types of wheelchairs is designed to be used in only one of the above-mentioned modes.

The task of the present invention is to develop an auxiliary traction device capable of obviating the aforementioned drawbacks and limitations of the prior art.

In particular, one object of the invention is to develop a universal-type auxiliary traction device, i.e. one that can be configured, depending on the driving condition that a disabled person faces, so as to be coupled to a manual wheelchair, alternatively at the front, at the rear or even in a central position relative to the rotation axis of the rear wheels of the aforesaid wheelchair.

Furthermore, it is the object of the invention to create an auxiliary traction device that can be manually controlled by a disabled person, or alternatively, that can make it possible to implement an assisted wheelchair guide.

Another object of the invention is to create an auxiliary traction device that can be configured in a simple and intuitive manner in order to alternate its use as described above.

The task as well as the objects mentioned above are achieved by an auxiliary traction device according to claim 1.

Further features of the auxiliary traction device are described in the respective dependent claims.

An auxiliary traction system comprising an auxiliary traction device of the invention associated with a specific accessory device, among a plurality of accessory devices, so as to configure the aforesaid auxiliary traction device to one of the aforementioned types of use, is also part of the invention.

The features of the auxiliary traction system of the invention are described in claim 8.

The method for fastening the auxiliary traction device of the invention to a wheelchair, according to claim 11 and the following ones, is also part of the invention.

The task and the above-mentioned objects, together with the advantages that will be mentioned hereinafter, are highlighted by the description of a preferred embodiment of the auxiliary traction device of the invention and, likewise, in three embodiments of auxiliary traction systems of the invention, which are given, for exemplary and non-limiting purposes, with reference to the accompanying drawings, wherein:
- Fig. 1 shows the auxiliary traction device of the invention according to a first axonometric view;
- Fig. 2 shows the auxiliary traction device of the invention according to a second axonometric view;
- Fig. 3 shows the auxiliary traction device of the invention as seen from above;
- Fig. 4 shows the auxiliary traction device of the invention according to a first side view;
- Fig. 5 shows the auxiliary traction device of the invention according to a first side view sectioned according to a vertical section plane;
- Fig. 6 shows the auxiliary traction device of the invention according to a first exploded side view;
- Fig. 7 shows the auxiliary traction device of the invention according to a second exploded side view;
- Fig. 8 shows a detail of the auxiliary traction device of the invention according to a first exploded side view;
- Fig. 9 shows a first embodiment of the auxiliary traction system of the invention;
- Fig. 10 shows a second embodiment of the auxiliary traction system of the invention;
- Fig. 11 shows a detail of the auxiliary traction system of Fig. 10;
- Fig. 12 shows a third embodiment of the auxiliary traction system of the invention mounted at the front of a wheelchair;
- Fig. 12a shows a detail of the auxiliary traction system of Fig. 12;
- Fig. 13 shows the third embodiment of the auxiliary traction system of the invention mounted at the rear of a wheelchair;
- Fig. 14 shows a fourth embodiment of the auxiliary traction system of the invention;
- Fig. 14a shows a sectional detail of the auxiliary traction system of Fig. 14. The auxiliary traction device for wheelchairs of the invention is shown in an isolated form in Figures 1 to 7, where it is globally referred to as **1.**

As it can be seen in the aforesaid figures, the aforesaid auxiliary traction device **1** comprises a support structure **2** to which a drive wheel **3** is rotatably coupled, so as to define a rotation axis **X** of the latter.

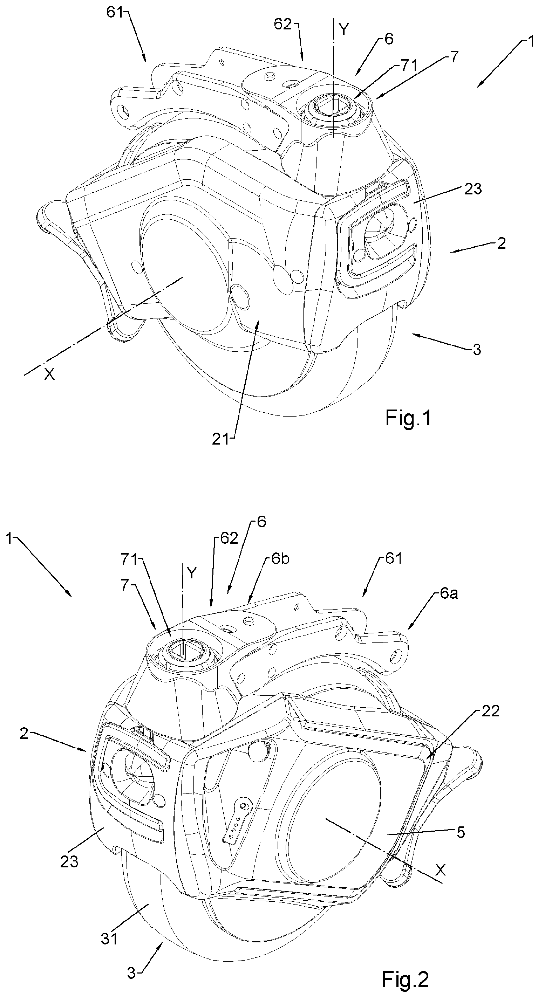

As it can be seen in Figs. 1 to 3, according to the preferred embodiment of the invention, such a support structure **2** has two side portions **21** and **22,** arranged on opposite sides of the drive wheel **3** so as to define said rotation axis **X,** connected to each other by a front wall **23** and a rear wall **24.**

Obviously, the auxiliary traction device **1** also comprises the aforementioned drive wheel **3,** which in turn is provided with a wheel **31** operatively connected to an electric motor **32,** arranged at the hub of such wheel **31.**

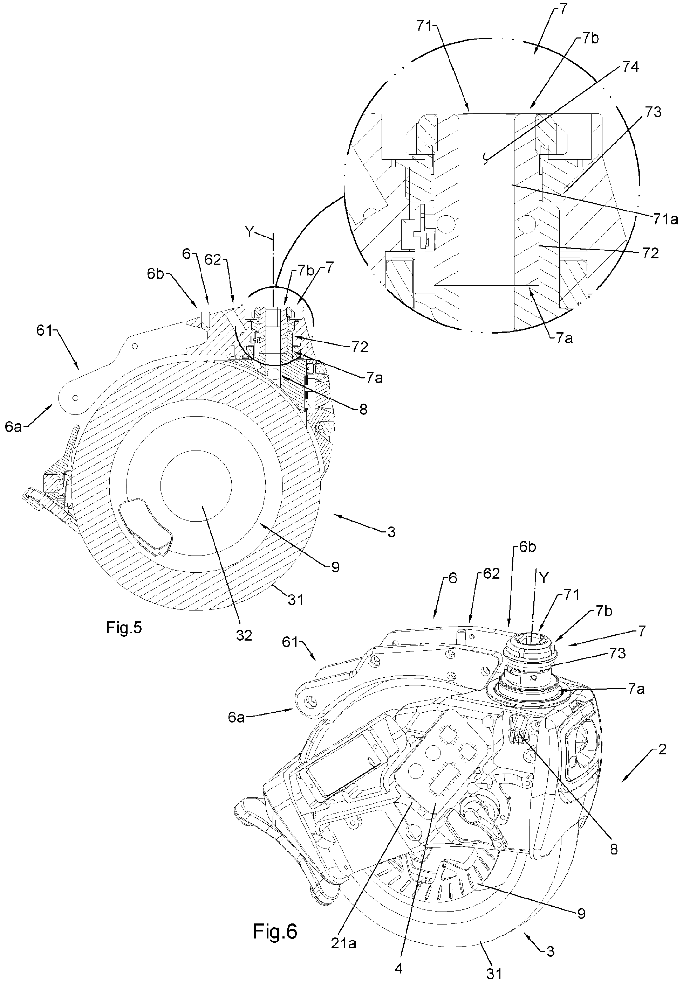

The auxiliary traction device **1** of the invention further comprises an electronic control unit **4** configured to control the rotation of the aforesaid electric motor **32.** Preferably, such an electronic control unit **4** is arranged inside a housing **21a,** defined in a first side portion **21** of the aforesaid two side portions **21** and **22** of the support structure **2,** as shown in Fig. 6.

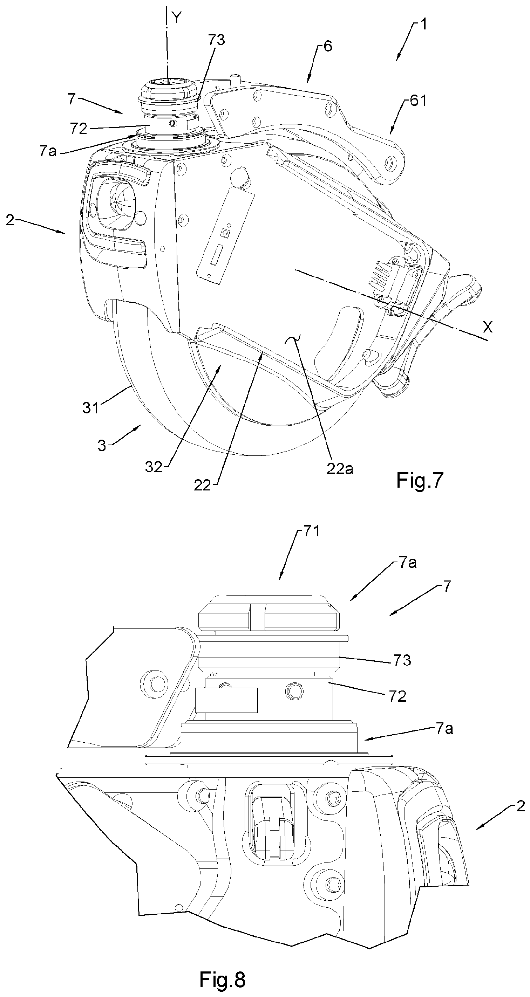

In addition, the auxiliary traction device **1** is provided with electrical energy storage means **5,** in particular a rechargeable battery-pack, configured to power the drive wheel **3** and the electronic control unit **4.** According to the preferred embodiment of the invention, such electrical energy storage means **5** are coupled and arranged inside a second housing **22a,** defined at the other side portion **22,** relative to the first housing **21a,** as shown in Fig. 7.

Advantageously, the fact that the electronic control unit **4** and the electrical energy storage means **5** are arranged respectively at housings **21a** and **22a** defined in the side portions **21** and **22** of the support structure **2** makes it possible to make the auxiliary traction device **1** of the invention extremely compact. This feature, together with further features described hereinafter, makes it possible to fasten the auxiliary traction device **1** of the invention alternatively in different positions relative to the wheelchair **W,** in particular at the front or rear of the latter or, alternatively, at the rotation axis **X2** of the rear wheels **RP** of the same wheelchair **W.** Consequently, this advantageously makes it possible to use the same auxiliary traction device 1 of the invention in different alternative modes:
1. driving with the auxiliary traction device **1** mounted at the front and guided by pushing on the wheels of the wheelchair, so as to implement an assisted driving;
2. driving with the auxiliary traction device **1** guided by a handlebar accessory;
3. outdoor driving with the auxiliary traction device **1** mounted at the front and guided by a power-assisted steering device controlled by a joystick (typical driving for tetraplegic users);
4. driving with the auxiliary traction device **1** mounted at the rear and guided by pushing on the wheels of the wheelchair, so as to implement an assisted driving;
5. indoor driving with the auxiliary traction device **1** mounted at the rear and guided by a power-assisted steering device controlled by a joystick (typical driving for tetraplegic users);
6. driving with the auxiliary traction device **1** mounted at the centre and guided by pushing on the wheels of the wheelchair, so as to implement an assisted driving.

None of the traction systems of the prior art is capable of being alternatively configured according to the aforementioned six modes.

The auxiliary traction device **1** is also provided with a connection assembly **6** which is rotatably associated with the support structure **2** so as to define a steering axis **Y** of the same support structure **2,** together with the drive wheel **3,** relative to this connection assembly **6.** In particular, as it can be seen in Fig. 5, such a steering axis **Y** is defined as orthogonal and offset from the rotation axis **X** of the drive wheel **3.**

Furthermore, such a rotatable association between the connection assembly **6** and the support structure **2** is a free-type rotatable association.

The term "free-type rotatable association" in this context means that the connection assembly **6** is free to rotate about the support structure **2** substantially without any constraints.

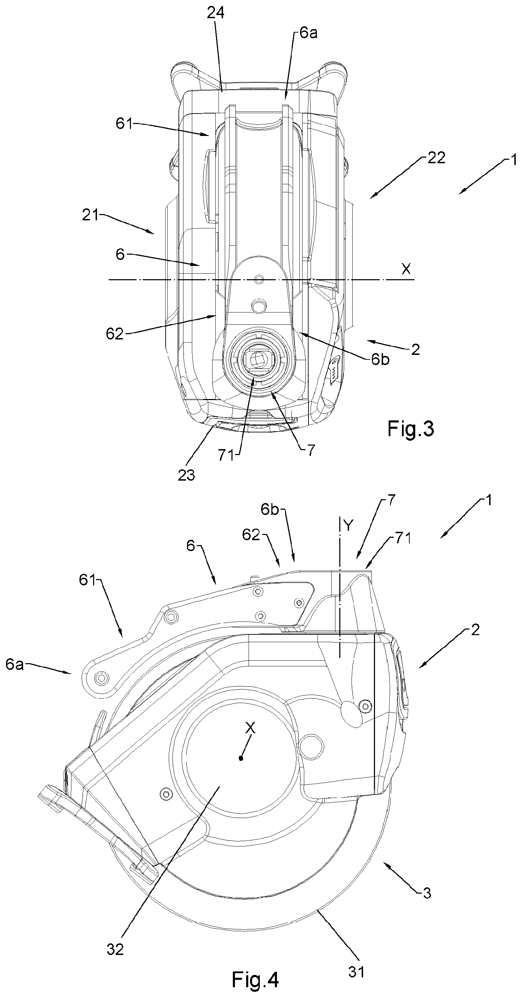

More in detail, such a free-type rotatable association between the connection assembly **6** and the support structure **2** allows the same connection assembly **6** to rotate substantially by an angle of 360° relative to said support structure **2.** As shown for example in Fig. 4, this connection assembly **6** comprises first fastening means **61** for connecting the auxiliary traction device **1** to the frame **T** of a wheelchair **W.**

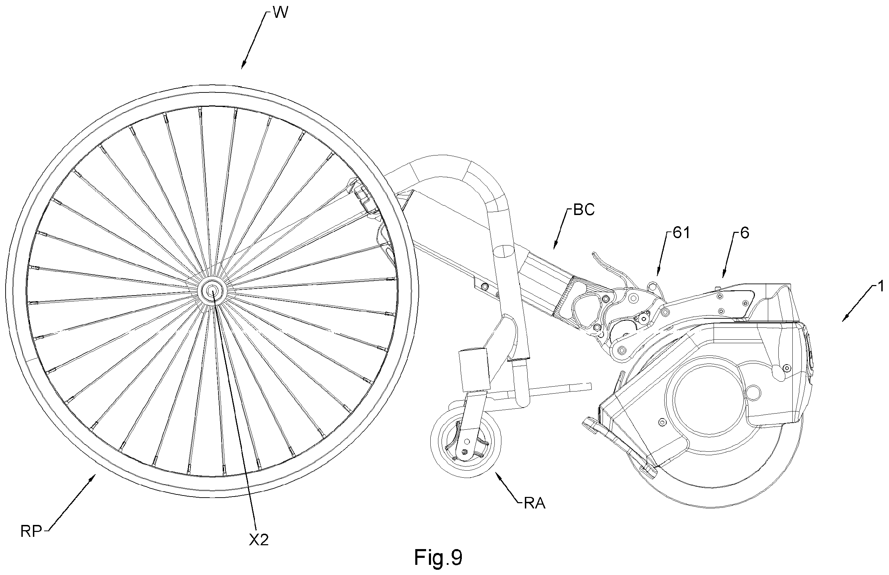

In particular, such first fastening means **61,** when the connection assembly **6** is rotated to a position substantially aligned with the support structure **2,** are configured to fasten the auxiliary traction device **1** at the front of the rotation axis **X2** of the rear wheels **RP** of the wheelchair **W** by means of a connection arm **BC,** so as to keep the front wheels **RA** of the same wheelchair **W** raised, as shown, for example, in Figures 9, 10 and 12.

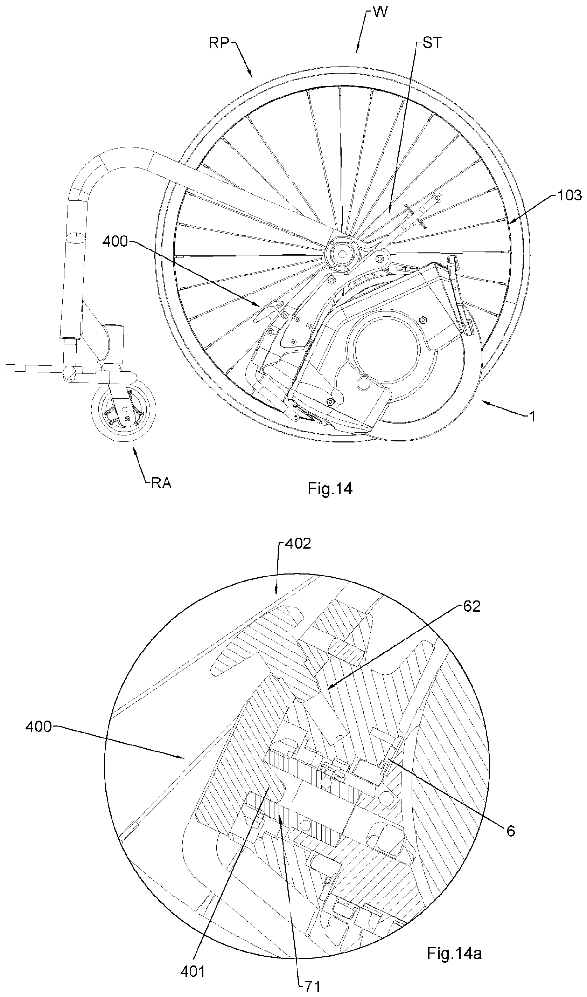

Furthermore, such first fastening means **61,** still when the connection assembly **6** is rotated to a position substantially aligned with the support structure **2,** are configured to fasten the auxiliary traction device **1,** by interposing a bracketing system **ST,** at the rotation axis **X2** of the rear wheels **RP** of the wheelchair **W,** as represented in Fig. 14.

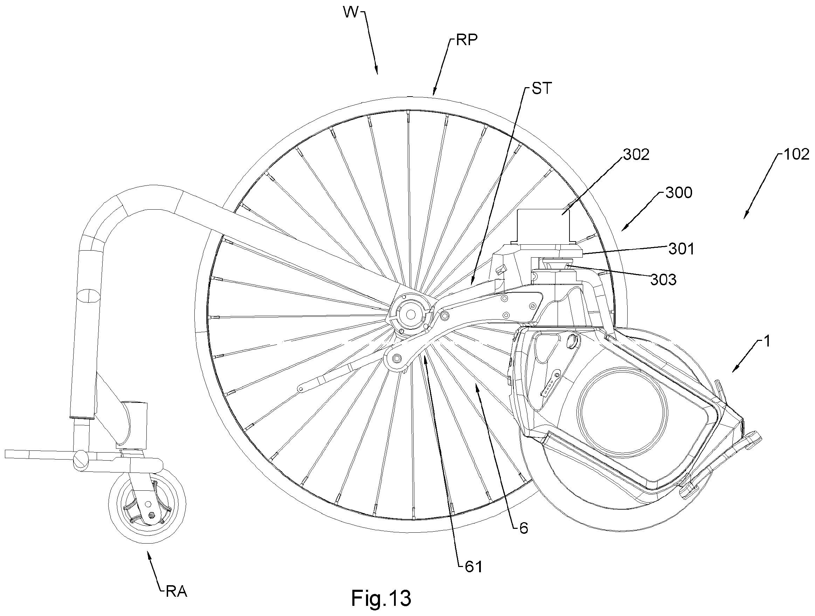

Moreover, said first fastening means **61,** when said connection assembly **6** is rotated substantially by 180° relative to the support structure **2,** are configured, by interposing an appropriate bracketing system **ST,** to fasten the auxiliary traction device **1** at the rear of the rotation axis **X2** of the rear wheels **RP** of the wheelchair **W,** as shown in Fig. 13.

According to the preferred embodiment of the invention, the connection assembly **6** has an elongated profile wherein said first fastening means **61** are defined at the distal end **6a** relative to the end **6b** at which such connection assembly **6** is rotatably associated with the support structure **2.**

This advantageously makes it possible, based on the relative orientation between the connection assembly **6** and the support structure **2,** as it can be seen in Figs. 9, 10, 12 and 13, to connect the auxiliary traction device **1** of the invention both at the front, at the rear, and, also, in a substantially aligned position relative to the rotation axis **X2** of the rear wheels **RP** of the wheelchair **W,** as visible in Fig. 14.

In particular, according to the preferred embodiment of the invention, the elongated profile of the connection assembly **6** is a curvilinear profile with an angle of curvature substantially corresponding to the angle of curvature of said wheel **31,** so that when said connection assembly **6** is arranged in a position substantially aligned with said support structure **2,** its profile follows a portion of the profile of the same wheel **31,** as visible in Fig. 4.

According to the invention, the auxiliary traction device **1** further comprises a hooking body **7** defined coaxially to the steering axis **Y,** rotatably coupled to the connection assembly **6** and integrally connected with a first end **7a** thereof to the support structure **2.** The hooking body **7** is further provided, at the second end **7b,** opposite to the aforementioned first end **7a,** with a hooking shaping **71,** so as to allow to operatively hook an external accessory device **200, 300, 400,** some types of which are better defined hereinafter, and is in turn provided with a counter-shaping complementary to the hooking shaping **71.**

This particular feature makes it possible to quickly and easily couple any one of the above-mentioned external accessory devices **200, 300, 400** to the auxiliary traction device **1.**

As will be described in detail hereinafter, this feature makes it possible to use the auxiliary traction device **1** of the invention in combination with appropriate and different external accessory devices **200, 300, 400,** and hooked to the wheelchair **W** in different positions.

Preferably, said hooking body **7,** as observed in Figs. 5 to 8, comprises a cylindrical hooking body **72,** integrally connected with the first end **7a** to the support structure **2,** so that the same cylindrical hooking body **72** is coaxial to the steering axis **Y.** Its cylindrical shaping makes it possible to implement the rotatable coupling with the connection assembly **6** by interposing at least one mechanical bearing **73.**

According to the preferred embodiment of the invention, such a cylindrical hooking body **72** is substantially inserted into said connection assembly **6,** as it can be seen for example in Fig. 5.

This further contributes to determining the utmost compactness of the auxiliary traction device **1** of the invention, in order to be able to combine it with the wheelchair **W** in the different configurations described above.

On the other hand, regarding the hooking shaping **71,** it preferably has a recessed polygonal profile, even more preferably a recessed rectangular profile.

Furthermore, still according to the preferred embodiment of the invention, the aforesaid cylindrical hooking body **72,** as it can still be observed in Fig. 5, has a through-hole **74** defined axially from the bottom **71a** of the hooking shaping **71,** to the first end **7a.**

Furthermore, it is envisaged, according to this preferred embodiment, that the support structure **2** is provided, below the first end **7a** of the cylindrical hooking body **72,** and thus adjacent to the aforesaid through-hole **74,** with a leverage assembly **8,** configured to actuate a braking system **9** associated with the wheel **31.**

This set of features therefore makes it possible to engage this leverage assembly **8,** and thus to actuate the braking system **9** of the wheel **31,** by intervening through the aforementioned through-hole **74.**

The technical advantage of such a configuration will be clarified hereinafter during the description of one of the preferred embodiments of the auxiliary traction system **1** of the invention.

Finally, according to the preferred embodiment of the invention, the connection assembly **6** also comprises second fastening means **62** for the removable-type integral fastening of the auxiliary traction device **1** with one of the aforementioned external accessory devices **200, 300, 400.**

Before describing the various embodiments of the auxiliary traction system **100, 101, 102** and **103,** it is important to reiterate that the auxiliary traction device 1 of the invention makes it possible to obtain an important technical advantage over the auxiliary traction devices of the known-type, in that, since the same auxiliary traction device **1** of the invention is provided with the aforementioned hooking body **7,** it can be coupled at different positions relative to the wheelchair **W and** can be used in different ways. In particular, as already mentioned above, the auxiliary traction device **1** may be used in isolation or may be associated at said hooking body **7** with different types of external accessory devices **200, 300, 400.**

More in detail, according to a first mode of use, the auxiliary traction device **1,** in an isolated manner, may be associated at the front with the rotation axis **X2** of the rear wheels **RP** of a wheelchair **W,** with the support structure **2** and the drive wheel **3** freely pivoting relative to the connection assembly **6,** as shown in Fig. 9.

Such an auxiliary traction device **1** is thereby configured to operate in the assisted driving mode, i.e. the electronic control unit **4,** by means of appropriate sensors, is configured to detect the speed and direction of movement imposed in manual mode on the rear wheels **RP** and, based on these readings, this electronic control unit **4** is configured to impose a rotation of a predetermined magnitude on the drive wheel **3.**

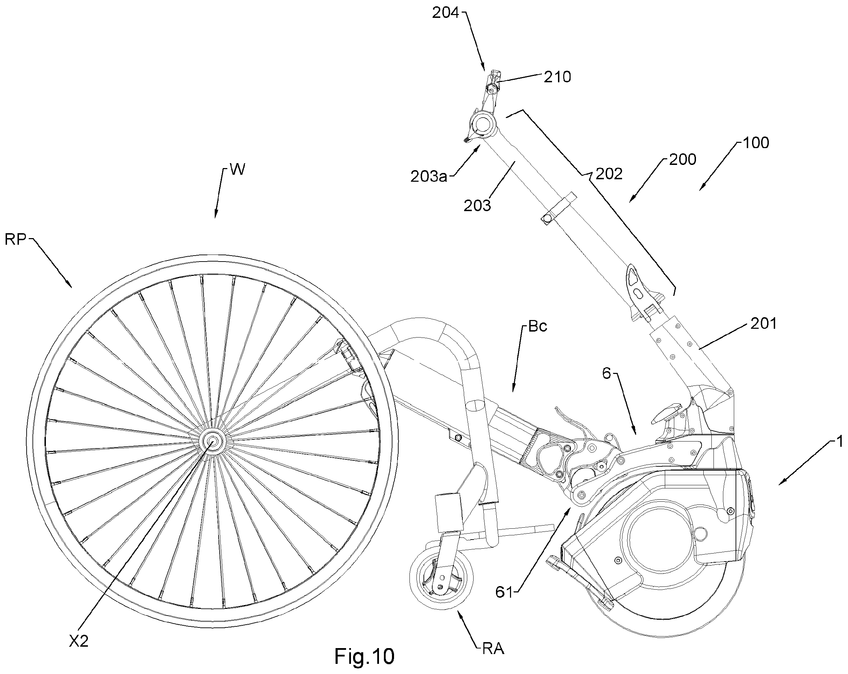

Alternatively, a second mode of use of the auxiliary traction device **1** provides to associate to the latter an accessory device defining a manual steering device **200,** so as to define a first embodiment of the auxiliary traction system **100** of the invention, as shown in Fig. 10.

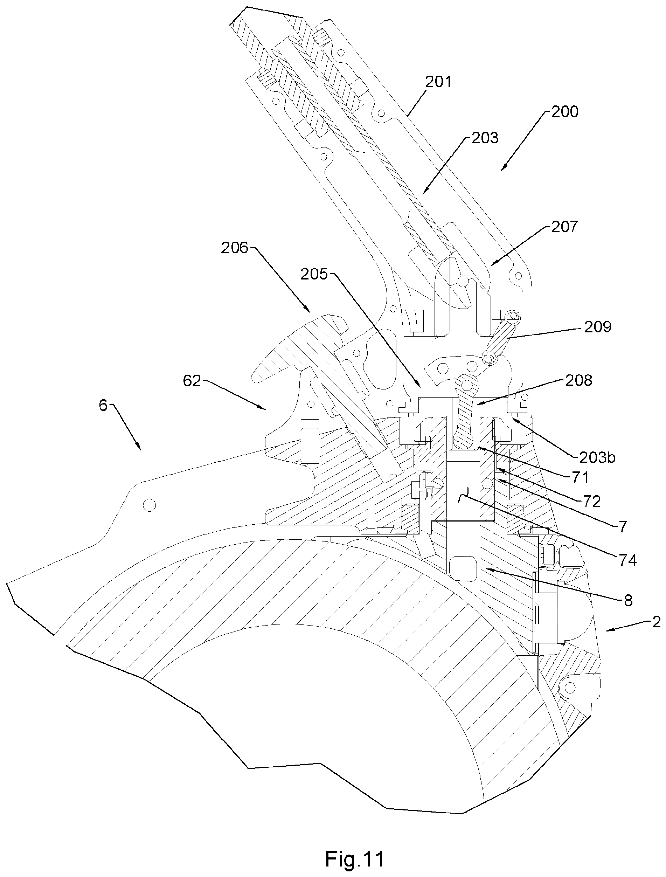

In particular, such a manual steering device **200** comprises a tubular column **201** and a steering unit **202** provided with a steering tube **203** rotatably inserted into said tubular column **201.** As it can be seen in Fig. 10, the steering tube **203** is provided, at one first end **203a** thereof, with a handlebar **204** and, as it can be seen in Fig. 11, at the second end **203b,** opposite to said first end **203a,** with a counter-shaping **205,** which is complementary to the hooking shaping **71** of the hooking body **7.** Furthermore, the tubular column **201** is provided with fastening means **206,** which are compatible with the second fastening means **62** of the coupling assembly **6.**

Such an association between the auxiliary traction device **1** and the aforesaid manual steering device **200** provides, in particular, to operatively couple the hooking shaping **71** to the counter-shaping **205,** so that the handlebar **204** is operatively cooperating with the support structure **2** and, in particular, with the drive wheel **3.** In other words, this operative cooperation allows to steer the drive wheel **3** by rotating the aforementioned handlebar **204.**

Furthermore, such an association between the auxiliary traction device **1** and the aforesaid manual steering device **200** provides to fasten the fastening means **206** of the same manual steering device **200** with the second fastening means **62** of the coupling assembly **6,** so as to make the two aforesaid devices integral.

According to the preferred embodiment of the invention, as it can be seen in Fig. 11, the manual steering device **200** comprises a cardan joint **207,** interposed between the steering tube **203** and the counter-shaping **205.**

This feature advantageously makes it possible to steer the drive wheel **3** while limiting the rotation from the handlebar **204,** thus avoiding the "helm" effect of the handlebar **204** itself.

Still preferably, the counter-shaping **205** of the manual steering device **200** comprises a through-hole **208** placed in communication with the through-hole **74** of the cylindrical hooking body **72.**

Furthermore, according to this preferred embodiment, the manual steering device **200** is provided with a leverage system **209** connected at the handlebar **204** to a manoeuvring lever **210,** configured to be actuated by a user, and at the opposite end, said leverage system **209** being arranged passing through the through-hole **208** of the counter-shaping **205** and through said through-hole **74** of the cylindrical hooking body **72** of the auxiliary traction device **1.**

Thus, the leverage system **209** is configured to engage the leverage assembly **8** of the auxiliary traction device **1,** when the manoeuvring lever **209** is actuated, in such a way as to activate the braking system **9.**

This makes it possible to create an emergency braking system on the auxiliary traction device **1** of the invention, which may be controlled from the handlebar **204** of the manual steering device **200,** and at the same time to obtain the quick and easy connection and disconnection of the same manual steering device **200** from the auxiliary traction device 1 of the invention.

In general, therefore, it is possible to implement, by means of the auxiliary traction device **1** of the invention, a manually guided auxiliary traction system **100** by means of a handlebar **204,** wherein the handlebar is provided with an acceleration system capable of controlling the rotation of the drive wheel **3.**

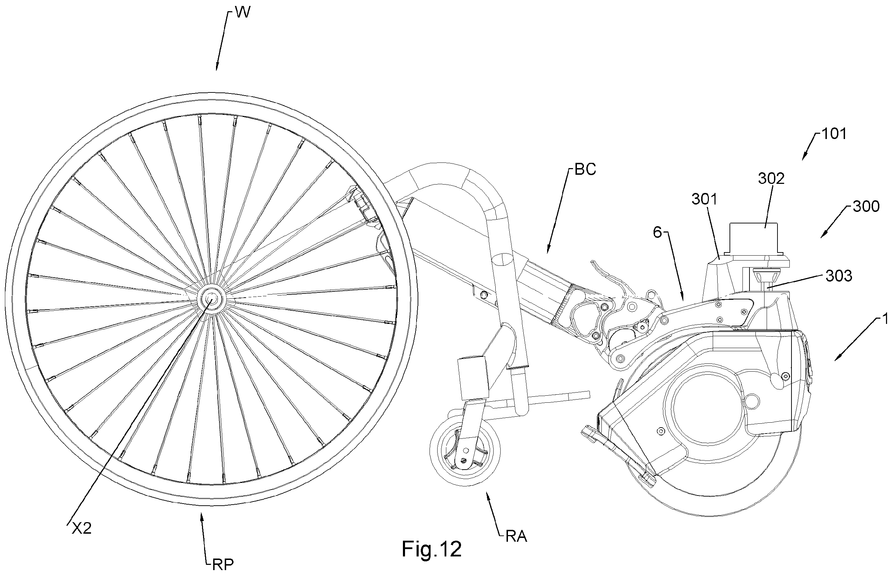

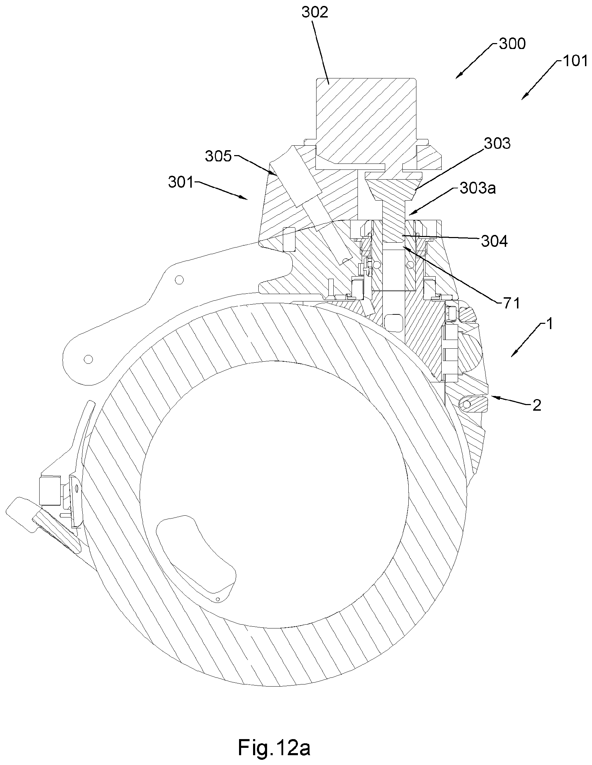

According to variant embodiments of the invention, the auxiliary traction systems **101** and **102,** respectively shown in Fig. 12 and Fig. 13, comprise, as an accessory device, a power-assisted steering device **300,** comprising in turn a support casing **301** wherein an electric steering motor **302** is inserted. In particular, as it can be seen in the detail of Fig. 12a relating to the auxiliary traction system **101,** this electric steering motor **302** is provided with a rotation shaft **303** provided, at its free end **303a,** with a counter-shaping **304.**

According to the invention, this counter-shaping **304** is coupled to the hooking shaping **71** in such a way as to have the rotation shaft **303** operatively cooperate with the support structure **2** and the drive wheel **3.** Furthermore, the support casing **301** is provided with fastening means **305** so as to make the power-assisted steering device **300** integral with the auxiliary traction device **1.** Furthermore, the auxiliary traction system **101** and **102,** according to the present preferred embodiment, comprises a satellite control device, not shown in the figures, configured such that the user can control the movement of the electric steering motor **302,** as well as to control the rotation speed and braking of the drive wheel **3.**

It is thereby possible to implement, by means of the auxiliary traction device **1** of the invention, an auxiliary traction system with power-assisted steering with front traction, as in the case of the auxiliary traction system **101** of Fig. 12, or rear traction, as in the case of the auxiliary traction system **102** of Fig. 13.

Furthermore, a different embodiment of the auxiliary traction system of the invention, referred to as **103** in Fig. 14, provides that the accessory device is a clamping bracket **400** wherein a counter-shaping **401** and fastening means **402** are integrally defined, as it can be seen in the detail of Fig. 14a.

In particular, this counter-shaping **401** and the hooking shaping **71** of the auxiliary traction device **1** are coupled to each other and, likewise, the fastening means **402** are fastened to the second fastening means **62,** in such a way as to prevent the rotation of the support structure **2** and the drive wheel **3** relative to the connection assembly **6.**

According to this embodiment of the auxiliary traction system **103,** the auxiliary traction device **1** is fastened at the rotation axis **X2** of the rear wheels **RP** of the wheelchair **W** and the auxiliary traction system **103** of the invention is controlled by means of a satellite control device, such as a joystick, operatively connected, preferably in a wireless mode, with the electronic control unit **4,** so as to allow the disabled person to control the speed and braking of the wheelchair **W.**

As mentioned above, the method of fastening the auxiliary traction device **1** to a wheelchair **W** is also part of the invention.

In particular, the method of the invention alternatively provides three fastening configurations, described hereinafter.

In particular, it should be pointed out that all the three configurations shortly described may be implemented with the same auxiliary traction device **1** of the invention.

A first fastening configuration provides to fasten the auxiliary traction device **1** at the front of the rotation axis **X2** of the rear wheels **RP** of the wheelchair **W.** To this end, the first configuration provides to perform the following steps:
- rotating the connection assembly **6** into a position substantially aligned with the support structure **2,** as visible e.g. in Fig. 9;
- arranging the auxiliary traction device **1** at the front of the wheelchair **W;**
- fastening, by means of the first fastening means **61** and a connection arm **BC,** the auxiliary traction device **1** to the rotation axis **X2** of the rear wheels **RP** of the wheelchair **W,** so as to keep the front wheels **RA** of the wheelchair **W** raised, as shown in Fig. 9.

This first configuration, as already described and reiterated shortly, makes it possible to use the auxiliary traction device **1** in three modes: either controlled by a manual steering device **200** provided with an accelerator, or by a satellite control system, such as a joystick, or without any further accessories, as an assisted driving system.

In the first case, in fact, the method of the invention, regarding the first configuration, provides to fasten said manual steering device **200** to the auxiliary traction device **1** where, as seen above, the manual steering device **200** comprises a tubular column **201** and a steering unit **202** provided with a steering tube **203** rotatably inserted into the tubular column **201.** Furthermore, the steering tube **203** is provided at one first end **203a** thereof with a handlebar **204** and at the second end **203b,** opposite to said first end **203a,** with a coupling counter-shaping **205** complementary to the hooking shaping **71** of said hooking body **7.** In addition, the tubular column **201** is provided with fastening means **206** compatible with the second fastening means **62** of the connection assembly **6.**

Thus, the fastening of such a manual steering device **200** with the auxiliary traction device **1** provides to couple the counter-shaping **205** and the hooking shaping **71** so as to have the handlebar **204** operatively cooperate with the support structure **2** and with the drive wheel **3,** and to fasten the fastening means **206** with the second fastening means **62** in such a way as to make the auxiliary traction device **1** integral with the manual steering device **200.**

In the second case, the first fastening configuration further provides to fasten a power-assisted steering device **300** to the auxiliary traction device **1,** where, as already mentioned above, the power-assisted steering device **300** comprises a support casing **301** wherein an electric steering motor **302** provided with a rotation shaft **303** is inserted. The rotation shaft **303** is provided, at a free end **303a** thereof, with the counter-shaping **304** complementary to the hooking shaping **71** of the hooking body **7.** The support casing **301** is provided with fastening means **305** compatible with the second fastening means **62** of the connection assembly **6.**

Thus, the fastening of the power-assisted steering device **300** with the auxiliary traction device **1** provides to couple the counter-shaping **304** to the hooking shaping **71** so as to have the rotation shaft **303** operatively cooperate with the support structure **2** and with the drive wheel **3,** and provides to fasten the fastening means **305** with the second fastening means **62** so as to make the auxiliary traction device **1** integral with the power-assisted steering device **300.** As mentioned above, this first configuration, which provides to use the power-assisted steering device **300,** also provides to associate a satellite control device with the power-assisted steering device **300** and the auxiliary traction device **1.** This control device is in fact configured such that a user can control the movement of the electric steering motor **302** and the movement of the drive wheel **3.**

Turning now to the description of the second fastening configuration, as an alternative to the first one, it provides to fasten the auxiliary traction device **1** at the rotation axis **X2** of the rear wheels **RP** of the wheelchair **W.**

To enable the implementation of the second configuration, it is provided to:
- rotate the connection assembly **6** to a position substantially aligned with the support structure **2;**
- arrange the auxiliary traction device **1** below the rotation axis **X2;**
- fasten the auxiliary traction device **1,** by interposing a bracketing system **ST,** at the rotation axis **X2** of the rear wheels **RP** of the wheelchair **W,** as visible in Fig. 14.

This second configuration, preferably, also provides to fasten the clamping bracket **400** to the auxiliary traction device **1,** where, as seen above, in the clamping bracket **400** the counter-shaping **401** complementary to the hooking shaping **71** of the hooking body **7** is integrally defined. Fastening means **402** compatible with the second fastening means **62** of the connection assembly **6** are also provided.

Thus, the fastening between the clamping bracket **400** and the auxiliary traction device **1** provides to couple the counter-shaping **401** and the hooking shaping **71** and to fasten the fastening means **402** to the second fastening means **62** so as to prevent the rotation of the support structure **2** and the drive wheel 3 relative to the connection assembly **6.**

Finally, the third configuration for fastening the auxiliary traction device **1,** as an alternative to the first and second configuration, provides to fasten this auxiliary traction device 1 at the rear of the rotation axis **X2** of the rear wheels **RP** of the wheelchair **W.** To allow this, as visible in Fig. 13, the third configuration provides to:
- rotate the connection assembly **6** substantially by 180° relative to the support structure **2;**
- arrange the auxiliary traction device **1** at the rear of the rotation axis **X2;**
- fasten the auxiliary traction device **1,** by interposing a bracketing system **ST,** at the rear of the rotation axis **X2** of the rear wheels **RP** of the wheelchair **W.**

This third configuration, as already described and reiterated shortly, makes it possible to use the auxiliary traction device 1 in two modes: either via a satellite control system, such as a joystick, or without any additional accessories, as an assisted driving system.

In the first case, the third configuration of the method provides to fasten also the power-assisted steering device **300** to the auxiliary traction device **1.** As seen above, the power-assisted steering device **300** comprises a support casing **301** wherein an electrical steering motor **302** provided with a rotation shaft **303** is inserted. The rotation shaft **303** is provided, at a free end **303a** thereof, with the counter-shaping **304** complementary to the hooking shaping **71** of the hooking body **7.** Furthermore, the support casing **301** is provided with fastening means **305** compatible with the second fastening means **62** of the connection assembly **6.** Thus, the fastening of the power-assisted steering device **300** to the auxiliary traction device **1** provides, also for the third configuration, to couple the counter-shaping **304** to the hooking shaping **71** so as to have the rotation shaft **303** operatively cooperate with the support structure **2** and with the drive wheel **3,** and to fasten the fastening means **305** with the second fastening means **62** so as to make the auxiliary traction device **1** integral with the power-assisted steering device **300.**

In this case as well, it is provided to associate a satellite control device with the power-assisted steering device **300** and the auxiliary traction device **1,** where the control device is configured such that the user can control the movement of the electric steering motor **302** and the movement of the drive wheel **3.**

So, for what stated hitherto, the auxiliary traction device **1** achieves all the preset objects.

In particular, the object to develop a universal-type auxiliary traction device is achieved, i.e. one that can be configured, depending on the driving conditions faced by a disabled person, so as to be coupled to a manual wheelchair, alternatively at the front, at the rear or even in a central position relative to the rotation axis of the rear wheels of the aforesaid wheelchair.

Furthermore, the object to create an auxiliary traction device that can be controlled manually by a disabled person, or alternatively, that can make it possible to implement a wheelchair assisted driving, is achieved.

Another object achieved is to create an auxiliary traction device that can be configured, in order to alternate use thereof as described above, in a simple and intuitive manner.

## Claims

1. Auxiliary traction device (1) for wheelchairs (W) comprising:
- a support structure (2) to which a drive wheel (3) is rotatably coupled so as to define a rotation axis (X) of said drive wheel (3), said support structure (2) having two side portions (21, 22) arranged on opposite sides of said drive wheel, connected to each other by a front wall (23) and a rear wall (24);
- said drive wheel (3) of the type comprising a wheel (31) operatively connected to an electric motor (32);
- an electronic control unit (4) configured to control said electric motor (32), said electronic control unit (4) being arranged in a first housing (21a) defined in a first side portion (21) of said side portions (21, 22);
- electrical energy storage means (5) configured to power said drive wheel (3) and said electronic control unit (4), said electrical energy storage means (5) being arranged in a second housing (22b) defined in the second side portion (22) of said side portions (21, 22);
- a connection assembly (6) having an elongated profile and rotatably associated with said support structure (2) at a distal end (6a) thereof so as to define a steering axis (Y) of said support structure (2) and of said drive wheel (3) relative to said connection assembly (6), said rotatable association being of the free type, said steering axis (Y) being defined as orthogonal and offset with respect to said rotation axis (X), said connection assembly (6) comprising first fastening means (61) defined in the second end of said connection assembly (6) for connecting said auxiliary traction device (1) to the frame of a wheelchair (W), said connection assembly (6) further comprising second fastening means (62) for fastening said auxiliary traction device (1) to an external accessory device (200, 300, 400);
**characterised in that** it comprises:
- a hooking body (7) coaxially defined with said steering axis (Y), rotatably coupled to said connection assembly (6) and integrally connected with a first end (7a) thereof to said support structure (2), said hooking body (7) being provided at its second end (7b), opposite to said first end (7a), with a hooking shaping (71) which has a recessed polygonal profile so as to allow the operating hooking of said external accessory device (200, 300, 400) provided with a counter-shaping (205, 304, 401) complementary to said hooking shaping (71).

2. Auxiliary traction device (1) according to claim 1, **characterised in that** said free-type association enables said connection assembly (6) to rotate substantially by an angle of 360° relative to said support structure (2).

3. Auxiliary traction device (1) according to any one of the preceding claims, **characterised in that** said elongated profile of said connection assembly (6) is a curvilinear profile with an angle of curvature substantially corresponding to the angle of curvature of said wheel (31), so that, when said connection assembly (6) is rotated in a position substantially aligned with said support structure (2), said elongated profile substantially follows a portion of the profile of said wheel (31).

4. Auxiliary traction device (1) according to any one of the preceding claims, **characterised in that** said hooking body (7) comprises a cylindrical hooking body (72) integrally connected with said first end (7a) to said support structure (2) so that said cylindrical hooking body (72) is coaxial to said steering axis (Y), said cylindrical hooking body (72) being rotatably coupled to said connection assembly (6) by means of the interposition of at least one mechanical bearing (73).

5. Auxiliary traction device (1) according to claim 4, **characterised in that** said cylindrical hooking body (72) is substantially inserted into said connection assembly (6).

6. Auxiliary traction device (1) according to any one of claims 4 or 5, **characterised in that** said cylindrical hooking body (72) has a through-hole (74) axially defined from the bottom (71a) of said hooking shaping (71) to said first end (7a), said support structure (2) being provided, below said first end (7a) of said cylindrical hooking body (72), with a leverage assembly (8) configured to actuate a braking system (9) associated with said wheel (31), said leverage assembly (8) being configured to be engaged through said through-hole (74).

7. Auxiliary traction device (1) according to any one of the preceding claims, **characterised in that** said first fastening means (61), when said connection assembly (6) is rotated in a position substantially aligned with said support structure (2), are configured to fasten said auxiliary traction device (1) at the front of the rotation axis (X2) of the rear wheels (RP) of said wheelchair (W) by means of a connection arm (BC) so as to keep the front wheels (RA) of said wheelchair (W) raised, and are configured to fasten said auxiliary traction device (1), by interposing a bracketing system (ST), at the rotation axis (X2) of said rear wheels (RP) of said wheelchair (W); said first fastening means (61), when said connection assembly (6) is substantially rotated by 180° relative to said support structure (2), are configured to fasten said auxiliary traction device (1), by interposing a bracketing system (ST), at the rear of the rotation axis (X2) of said rear wheels (RP) of said wheelchair (W).

8. Auxiliary traction system (100, 101, 102, 103) **characterised in that** it comprises:
- an auxiliary traction device (1) according to any one of the preceding claims;
- one or more external accessory devices (200, 300, 400), each one provided with a counter-shaping (205, 304, 401) complementary to said hooking shaping (71) of said hooking body (7) and with fastening means (206, 305, 402) compatible with said second fastening means (62) of said connection assembly (6), said counter-shaping (205, 304, 401) and said hooking shaping (71) being coupled to each other so as to have said external accessory device (200, 300, 400) operatively cooperate with said support structure (2) and with said drive wheel (3) of said auxiliary traction device (1), said fastening means (206, 305, 402) being fastened to said second fastening means (62) of said connection assembly (6) in such a way as to make said auxiliary traction device (1) integral with said external accessory device (200, 300, 400); said one or more external accessory devices (200, 300, 400) being:
- a manual steering device (200) comprising a tubular column (201) and a steering unit (202) provided with a steering tube (203) rotatably inserted into said tubular column (201), said steering tube (203) being provided at one first end (203a) thereof with a handlebar (204) and at the second end (203b) opposite to said first end (203a), of said coupling counter-shaping (205), said counter-shaping (205) and said hooking shaping (71) being coupled to each other so as to have said handlebar (204) operatively cooperate with said support structure (2) and with said drive wheel (3), said tubular column (201) being provided with said fastening means (206), so as to make said auxiliary traction device (1) integral with said manual steering device (200), said auxiliary traction device (1) being fastened at the front to the rotation axis (X2) of said rear wheels (RP) of said wheelchair (W) by means of said first fastening means (61), when said connection assembly (6) is rotated to a position substantially aligned with said support structure (2), and by means of a connection arm (BC), so as to keep the front wheels (RA) of said wheelchair (W) raised;
- a power-assisted steering device (300) comprising a support casing (301) wherein an electric steering motor (302) provided with a rotation shaft (303) is inserted, said rotation shaft (303) being provided at its free end (303a) with said counter-shaping (304), said counter-shaping (304) and said hooking shaping (71) being coupled to each other so as to have said rotation shaft (303) operatively cooperate with said support structure (2) and with said drive wheel (3), said support casing (301) being provided with said fastening means (305) so as to make said auxiliary traction device (1) integral with said power-assisted steering device (300), said auxiliary traction system (101, 102) further comprising a satellite control device configured such that a user can control the movement of said electric steering motor (302); said auxiliary traction device (1) being fastened, at the front, to the rotation axis (X2) of the rear wheels (RP) of said wheelchair (W) by means of said first fastening means (61), when said connection assembly (6) is rotated to a position substantially aligned with said support structure (2), and by means of a connection arm (BC) so as to keep the front wheels (RA) of said wheelchair (W) raised, or said auxiliary traction device (1) being fastened at the rear to the rotation axis (X2) of said rear wheels (RP) of said wheelchair (W) by means of said first fastening means (61), when said connection assembly (6) is rotated substantially by 180° relative to said support structure (2), and by means of interposing a bracketing system (ST);
- a clamping bracket (400) wherein said counter-shaping (401) and said fastening means (402) are integrally defined, said counter-shaping (401) and said hooking shaping (71) being coupled to each other and said fastening means (402) being fastened to said second fastening means (62) so as to prevent the rotation of said support structure (2) and of said drive wheel (3) relative to said connection assembly (6), said auxiliary traction device (1) being fastened at the rotation axis (X2) of the rear wheels (RP) of said wheelchair (W) by means of said first fastening means (61), when said connection assembly (6) is rotated in a position substantially aligned with said support structure (2), and by interposing a bracketing system (ST).

9. Auxiliary traction system (100) according to claim 8, **characterised in that** said manual steering device (200) comprises, interposed between said steering tube (203) and said counter-shaping (205), a cardan joint (207).

10. Auxiliary traction system (100) according to any one of claims 8 or 9 in combination with claim 6, **characterised in that** said counter-shaping (205) comprises a through-hole (208) in communication with said through-hole (74) of said cylindrical hooking body (72), said manual steering device (200) being provided with a leverage system (209) connected at said handlebar (204) with a manoeuvring lever (210), configured to be actuated by a user and, at the opposite end, said leverage system (209) passing through said through-hole (208) of said counter-shaping (205) and through said through-hole (74) of said cylindrical hooking body (72) of said auxiliary traction device (1), said leverage system (209) being configured to engage said leverage assembly (8) of said auxiliary traction device (1) when said manoeuvring lever (210) is actuated, so as to activate said braking system (9).

11. Method for fastening an auxiliary traction device (1) according to any one of claims 1 to 7 to a wheelchair (W), **characterised in that** it alternatively provides three fastening configurations:
- a first configuration for fastening said auxiliary traction device (1) at the front of the rotation axis (X2) of the rear wheels (RP) of said wheelchair (W), said first configuration providing to:
- rotate said connection assembly (6) to a position substantially aligned with said support structure (2);
- arrange said auxiliary traction device (1) at the front of said wheelchair (W);
- fasten, by means of said first fastening means (61) and a connection arm (BC), said auxiliary traction device (1) to said rotation axis (X2) of said rear wheels (RP) of said wheelchair (W), so as to keep the front wheels (RA) of said wheelchair (W) raised;
- optionally hook a counter-shaping (205, 304, 401) of an external accessory device (200, 300, 400) to said hooking shaping (71) of said hooking body (7);
- a second configuration for fastening said auxiliary traction device (1) at the rotation axis (X2) of said rear wheels (RP) of said wheelchair (W), said second configuration providing to:
- rotate said connection assembly (6) to a position substantially aligned with said support structure (2);
- arrange said auxiliary traction device (1) underneath said rotation axis (X2);
- fasten said auxiliary traction device (1), by interposing a bracketing system (ST), at said rotation axis (X2) of said rear wheels (RP) of said wheelchair (W);
- optionally hook a counter-shaping (205, 304, 401) of an external accessory device (200, 300, 400) to said hooking shaping (71) of said hooking body (7);
- a third configuration for fastening said auxiliary traction device (1) at the rear of the rotation axis (X2) of the rear wheels (RP) of said wheelchair (W), said third configuration providing to:
- rotate said connection assembly (6) substantially by 180° relative to said support structure (2);
- arrange said auxiliary traction device (1) at the rear of said rotation axis (X2);
- fasten said auxiliary traction device (1), by interposing a bracketing system (ST), at the rear of the rotation axis (X2) of said rear wheels (RP) of said wheelchair (W);
- optionally hook a counter-shaping (205, 304, 401) of an external accessory device (200, 300, 400) to said hooking shaping (71) of said hooking body (7).

12. Fastening method according to claim 11, **characterised in that** said first fastening configuration further comprises fastening a manual steering device (200) to said auxiliary traction device (1), wherein said manual steering device (200) comprises a tubular column (201) and a steering unit (202) provided with a steering tube (203) rotatably inserted in said tubular column (201), said steering tube (203) being provided at a first end (203a) thereof with a handlebar (204) and at a second end (203b), opposite to said first end (203a), with a coupling counter-shaping (205) complementary to said hooking shaping (71) of said hooking body (7), said tubular column (201) being provided with said fastening means (206) compatible with said second fastening means (62) of said connection assembly (6); said fastening providing to coupling said counter-shaping (205) and said hooking shaping (71), so as to have said handlebar (204) operatively cooperate with said support structure (2) and with said drive wheel (3), and fastening said fastening means (206) with said second fastening means (62), so as to make said auxiliary traction device (1) integral with said manual steering device (200).

13. Fastening method according to claim 11, **characterised in that** said first fastening configuration further comprises fastening a power-assisted steering device (300) to said auxiliary traction device (1), wherein said power-assisted steering device (300) comprises a support casing (301) wherein an electric steering motor (302) provided with a rotation shaft (303) is inserted, said rotation shaft (303) being provided, at its free end (303a), with said counter-shaping (304) complementary to said hooking shaping (71) of said hooking body (7), said support casing (301) being provided with said fastening means (305) compatible with said second fastening means (62) of said connection assembly (6); said fastening providing to couple said counter-shaping (304) to said hooking shaping (71), so as to have said rotation shaft (303) operatively cooperate with said support structure (2) and with said drive wheel (3), and fastening said fastening means (305) with said second fastening means (62), so as to make said auxiliary traction device (1) integral with said power-assisted steering device (300); said first fastening configuration further providing to associate a satellite control device to said power-assisted steering device (300) and to said auxiliary traction device (1), said satellite control device being configured such that a user can control the movement of said electric steering motor (302) and the movement of said drive wheel (3).

14. Fastening method according to claim 11, **characterised in that** said second fastening configuration further provides to fasten a clamping bracket (400) to said auxiliary traction device (1), wherein in said clamping bracket (400) a counter shaping (401) complementary to said hooking shaping (71) of said hooking body (7) is integrally defined, and fastening means (402) compatible with said second fastening means (62) of said connection assembly (6); said fastening providing to couple said counter-shaping (401) and said hooking shaping (71) and fastening said fastening means (402) to said second fastening means (62) so as to prevent the rotation of said support structure (2) and said drive wheel (3) relative to said connection assembly (6).

15. Fastening method according to claim 11, **characterised in that** said third fastening configuration further comprises fastening a power-assisted steering device (300) to said auxiliary traction device (1), wherein said power-assisted steering device (300) comprises a support casing (301) wherein an electric steering motor (302) provided with a rotation shaft (303) is inserted, said rotation shaft (303) being provided, at its free end (303a), with said counter-shaping (304) complementary to said hooking shaping (71) of said hooking body (7), said support casing (301) being provided with said fastening means (305) compatible with said second fastening means (62) of said connection assembly (6); said fastening providing to couple said counter-shaping (304) to said hooking shaping (71), so as to have said rotation shaft (303) operatively cooperate with said support structure (2) and with said drive wheel (3), and to fasten said fastening means (305) with said second fastening means (62), so as to make said auxiliary traction device (1) integral with said power-assisted steering device (300); said first fastening configuration further providing to associate a satellite control device to said power-assisted steering device (300) and to said auxiliary traction device (1), said satellite control device being configured such that a user can control the movement of said electric steering motor (302) and the movement of said drive wheel (3).

## Patentansprüche

1. Hilfszugvorrichtung (1) für Rollstühle (W), umfassend:
- eine Trägerstruktur (2), an die ein Antriebsrad (3) drehbar gekoppelt ist, um eine Drehachse (X) des Antriebsrads (3) zu definieren, wobei die Trägerstruktur (2) zwei Seitenabschnitte (21, 22) aufweist, die auf gegenüberliegenden Seiten des Antriebsrads angeordnet sind und durch eine vordere Wand (23) und eine hintere Wand (24) miteinander verbunden sind;
- wobei das Antriebsrad (3) von der Art ist, die ein Rad (31) umfasst, das mit einem Elektromotor (32) betriebswirksam verbunden ist;
- eine elektronische Steuereinheit (4), die zum Steuern des Elektromotors (32) konfiguriert ist, wobei die elektronische Steuereinheit (4) in einer ersten Aufnahme (21a) angeordnet ist, die in einem ersten Seitenabschnitt (21) der Seitenabschnitte (21, 22) definiert ist;
- elektrische Energiespeichermittel (5), die konfiguriert sind, um das Antriebsrad (3) und die elektronische Steuereinheit (4) mit Strom zu versorgen, wobei die elektrischen Energiespeichermittel (5) in einer zweiten Aufnahme (22b) angeordnet sind, die in dem zweiten Seitenabschnitt (22) der Seitenabschnitte (21, 22) definiert ist;
- eine Verbindungsbaugruppe (6) mit einem länglichen Profil, die an einem distalen Ende (6a) davon mit der Trägerstruktur (2) drehbar assoziiert ist, um eine Lenkachse (Y) der Trägerstruktur (2) und des Antriebsrades (3) relativ zu der Verbindungsbaugruppe (6) zu definieren, wobei die drehbare Assoziation vom freien Typ ist, wobei die Lenkachse (Y) als orthogonal und versetzt in Bezug auf die Drehachse (X) definiert ist, wobei die Verbindungsbaugruppe (6) erste Befestigungsmittel (61) umfasst, die in dem zweiten Ende der Verbindungsbaugruppe (6) definiert sind, um die Hilfszugvorrichtung (1) mit dem Rahmen eines Rollstuhls (W) zu verbinden, wobei die Verbindungsbaugruppe (6) ferner zweite Befestigungsmittel (62) umfasst, um die Hilfszugvorrichtung (1) an einer externen Zubehörvorrichtung (200, 300, 400) zu befestigen;
**dadurch gekennzeichnet, dass** sie Folgendes umfasst:
- einen Einhakkörper (7), der koaxial mit der Lenkachse (Y) definiert ist, drehbar mit der Verbindungsbaugruppe (6) gekoppelt ist und mit einem ersten Ende (7a) davon einstückig mit der Trägerstruktur (2) verbunden ist, wobei der Einhakkörper (7) an seinem zweiten Ende (7b), das dem ersten Ende (7a) gegenüberliegt, mit einer Einhakformung (71) versehen ist, die ein vertieftes polygonales Profil aufweist, um das funktionelle Einhaken der externen Zubehörvorrichtung (200, 300, 400) zu ermöglichen, die mit einer Gegenformung (205, 304, 401) versehen ist, die zu der Einhakformung (71) komplementär ist.

2. Hilfszugvorrichtung (1) nach Anspruch 1, **dadurch gekennzeichnet, dass** die Assoziation des freien Typs ermöglicht, dass sich die Verbindungsbaugruppe (6) im Wesentlichen um einen Winkel von 360° relativ zu der Trägerstruktur (2) dreht.

3. Hilfszugvorrichtung (1) nach einem der vorhergehenden Ansprüche, **dadurch gekennzeichnet, dass** das längliche Profil der Verbindungsbaugruppe (6) ein gekrümmtes Profil mit einem Krümmungswinkel ist, der im Wesentlichen dem Krümmungswinkel des Rades (31) entspricht, so dass, wenn die Verbindungsbaugruppe (6) in einer Position gedreht wird, die im Wesentlichen mit der Trägerstruktur (2) ausgerichtet ist, das längliche Profil im Wesentlichen einem Abschnitt des Profils des Rades (31) folgt.

4. Hilfszugvorrichtung (1) nach einem der vorhergehenden Ansprüche, **dadurch gekennzeichnet, dass** der Einhakkörper (7) einen zylindrischen Einhakkörper (72) umfasst, der einstückig mit dem ersten Ende (7a) an die Trägerstruktur (2) verbunden ist, so dass der zylindrische Einhakkörper (72) koaxial zu der Lenkachse (Y) ist, wobei der zylindrische Einhakkörper (72) drehbar mit der Verbindungsbaugruppe (6) mittels der Zwischenschaltung von mindestens einem mechanischen Lager (73) gekoppelt ist.

5. Hilfszugvorrichtung (1) nach Anspruch 4, **dadurch gekennzeichnet, dass** der zylindrische Einhakkörper (72) im Wesentlichen in die Verbindungsbaugruppe (6) eingesetzt ist.

6. Hilfszugvorrichtung (1) nach einem der Ansprüche 4 oder 5, **dadurch gekennzeichnet, dass** der zylindrische Einhakkörper (72) ein Durchgangsloch (74) aufweist, das axial vom Boden (71a) der Einhakformung (71) zum ersten Ende (7a) definiert ist, wobei die Trägerstruktur (2) unterhalb des ersten Endes (7a) des zylindrischen Einhakkörpers (72) mit einer Hebelbaugruppe (8) versehen ist, die dazu konfiguriert ist, ein Bremssystem (9) zu betätigen, das mit dem Rad (31) assoziiert ist, wobei die Hebelbaugruppe (8) dazu konfiguriert ist, durch das Durchgangsloch (74) in Eingriff gebracht zu werden.

7. Hilfszugvorrichtung (1) nach einem der vorhergehenden Ansprüche, **dadurch gekennzeichnet, dass** die ersten Befestigungsmittel (61), wenn die Verbindungsbaugruppe (6) in einer Position gedreht wird, die im Wesentlichen mit der Trägerstruktur (2) ausgerichtet ist, konfiguriert sind, um die Hilfszugvorrichtung (1) an der Vorderseite der Drehachse (X2) der Hinterräder (RP) des Rollstuhls (W) mittels eines Verbindungsarms (BC) zu befestigen, um die Vorderräder (RA) des Rollstuhls (W) angehoben zu halten, und konfiguriert sind, um die Hilfszugvorrichtung (1) durch Zwischenschalten eines Halterungssystems (ST) an der Drehachse (X2) der Hinterräder (RP) des Rollstuhls (W) zu befestigen; die ersten Befestigungmittel (61), wenn die Verbindungsbaugruppe (6) im Wesentlichen um 180° relativ zu der Trägerstruktur (2) gedreht wird, konfiguriert sind, um die Hilfszugvorrichtung (1) durch Zwischenschalten eines Halterungssystems (ST) an der Rückseite der Drehachse (X2) der Hinterräder (RP) des Rollstuhls (W) zu befestigen.

8. Hilfszugssystem (100, 101, 102, 103), **dadurch gekennzeichnet, dass** es Folgendes umfasst:
- eine Hilfszugvorrichtung (1) nach einem der vorhergehenden Ansprüche;
- eine oder mehrere externe Zubehörvorrichtungen (200, 300, 400), die jeweils mit einer Gegenformung (205, 304, 401), die zu der Einhakformung (71) des Einhakkörpers (7) komplementär ist, und mit Befestigungsmitteln (206, 305, 402) versehen sind, die mit den zweiten Befestigungsmitteln (62) der Verbindungsbaugruppe (6) kompatibel sind, wobei die Gegenformung (205, 304, 401) und die Einhakformung (71) so miteinander gekoppelt sind, dass die externe Zubehörvorrichtung (200, 300, 400) betriebswirksam mit der Trägerstruktur (2) und mit dem Antriebsrad (3) der Hilfszugvorrichtung (1) zusammenwirkt, wobei die Befestigungsmittel (206, 305, 402) an den zweiten Befestigungsmitteln (62) der Verbindungsbaugruppe (6) so befestigt sind, dass die Hilfszugvorrichtung (1) einstückig mit der externen Zubehörvorrichtung (200, 300, 400) gemacht wird; wobei die eine oder mehreren externen Zubehörvorrichtungen (200, 300, 400) sind:
- eine manuelle Lenkvorrichtung (200), die eine rohrförmige Säule (201) und eine Lenkeinheit (202) umfasst, die mit einem Lenkrohr (203) versehen ist, das drehbar in die rohrförmige Säule (201) eingesetzt ist, wobei das Lenkrohr (203) an einem ersten Ende (203a) davon mit einer Lenkstange (204) und an dem zweiten Ende (203b), das dem ersten Ende (203a) gegenüberliegt, der Kopplungsgegenformung (205) versehen ist, wobei die Gegenformung (205) und die Einhakformung (71) miteinander gekoppelt sind, sodass die Lenkstange (204) betriebswirksam mit der Trägerstruktur (2) und mit dem Antriebsrad (3) zusammenwirkt, wobei die rohrförmige Säule (201) mit den Befestigungsmitteln (206) versehen ist, um die Hilfszugvorrichtung (1) einstückig mit der manuellen Lenkvorrichtung (200) zu machen, wobei die Hilfszugvorrichtung (1) vorne an der Drehachse (X2) der Hinterräder (RP) des Rollstuhls (W) mittels der ersten Befestigungsmittel (61), wenn die Verbindungsbaugruppe (6) in eine Position gedreht wird, die im Wesentlichen mit der Trägerstruktur (2) ausgerichtet ist, und mittels eines Verbindungsarms (BC) befestigt ist, um die Vorderräder (RA) des Rollstuhls (W) angehoben zu halten;
- eine Servolenkvorrichtung (300), die ein Trägergehäuse (301) umfasst, in das ein mit einer Drehwelle (303) versehener elektrischer Lenkmotor (302) eingesetzt ist, wobei die Drehwelle (303) an ihrem freien Ende (303a) mit der Gegenformung (304) versehen ist, wobei die Gegenformung (304) und die Einhakformung (71) so miteinander gekoppelt sind, dass die Drehwelle (303) mit der Trägerstruktur (2) und dem Antriebsrad (3) betriebswirksam zusammenwirkt, wobei das Trägergehäuse (301) mit den Befestigungsmitteln (305) versehen ist um die Hilfszugvorrichtung (1) einstückig mit der Servolenkvorrichtung (300) zu machen, wobei das Hilfszugsystem (101, 102) ferner eine Satellitensteuervorrichtung umfasst, die so konfiguriert ist, dass ein Benutzer die Bewegung des elektrischen Lenkmotors (302) steuern kann; wobei die Hilfszugvorrichtung (1) vorne an der Drehachse (X2) der Hinterräder (RP) des Rollstuhls (W) mittels der ersten Befestigungsmittel (61), wenn die Verbindungsbaugruppe (6) in eine Position gedreht wird, die im Wesentlichen mit der Trägerstruktur (2) ausgerichtet ist und mittels eines Verbindungsarms (BC) befestigt ist, um die Vorderräder (RA) des Rollstuhls (W) angehoben zu halten, oder wobei die Hilfszugvorrichtung (1) hinten an der Drehachse (X2) der Hinterräder (RP) des Rollstuhls (W) mittels der ersten Befestigungsmittel (61), wenn die Verbindungsbaugruppe (6) im Wesentlichen um 180° relativ zu der Trägerstruktur (2) gedreht wird, und durch Zwischenschalten eines Halterungssystems (ST) befestigt ist;
- einen Klemmbügel (400), in dem die Gegenformung (401) und die Befestigungsmittel (402) einstückig definiert sind, wobei die Gegenformung (401) und die Einhakformung (71) miteinander gekoppelt sind und die Befestigungsmittel (402) an den zweiten Befestigungsmitteln (62) befestigt sind, um die Drehung der Trägerstruktur (2) und des Antriebsrads (3) relativ zu der Verbindungsbaugruppe (6) zu verhindern, wobei die Hilfszugvorrichtung (1) an der Drehachse (X2) der Hinterräder (RP) des Rollstuhls (W) mittels der ersten Befestigungsmittel (61), wenn die Verbindungsbaugruppe (6) in eine Position gedreht wird, die im Wesentlichen mit der Trägerstruktur (2) ausgerichtet ist, und durch Zwischenschalten eines Halterungssystems (ST) befestigt ist.

9. Hilfszugsystem (100) nach Anspruch 8, **dadurch gekennzeichnet, dass** die manuelle Lenkvorrichtung (200), die zwischen dem Lenkrohr (203) und der Gegenformung (205) geschaltet ist, ein Kardangelenk (207) umfasst.

10. Hilfszugsystem (100) nach einem der Ansprüche 8 oder 9 in Kombination mit Anspruch 6, **dadurch gekennzeichnet, dass** die Gegenformung (205) ein Durchgangsloch (208) in Kommunikation mit dem Durchgangsloch (74) des zylindrischen Einhakkörpers (72) umfasst, wobei die manuelle Lenkvorrichtung (200) mit einem Hebelsystem (209) versehen ist, das an der Lenkstange (204) mit einem Bedienungshebel (210) verbunden ist, der so konfiguriert ist, dass er von einem Benutzer betätigt werden kann, und wobei das Hebelsystem (209) am entgegengesetzten Ende durch das Durchgangsloch (208) der Gegenformung (205) und durch das Durchgangsloch (74) des zylindrischen Einhakkörpers (72) der Hilfszugvorrichtung (1) verläuft, wobei das Hebelsystem (209) so konfiguriert ist, dass es mit der Hebelbaugruppe (8) der Hilfszugvorrichtung (1) in Eingriff kommt, wenn der Bedienungshebel (210) betätigt wird, um das Bremssystem (9) zu aktivieren.

11. Verfahren zur Befestigung einer Hilfszugvorrichtung (1) nach einem der Ansprüche 1 bis 7 an einem Rollstuhl (W), **dadurch gekennzeichnet, dass** es alternativ drei Befestigungskonfigurationen vorsieht:
- eine erste Konfiguration zum Befestigen der Hilfszugvorrichtung (1) an der Vorderseite der Drehachse (X2) der Hinterräder (RP) des Rollstuhls (W), wobei die erste Konfiguration Folgendes vorsieht:
- Drehen der Verbindungsbaugruppe (6) in eine Position, die im Wesentlichen mit der Trägerstruktur (2) ausgerichtet ist;
- Anordnen der Hilfszugvorrichtung (1) an der Vorderseite des Rollstuhls (W);
- Befestigen der Hilfszugvorrichtung (1) mittels der ersten Befestigungsmittel (61) und eines Verbindungsarms (BC) an der Drehachse (X2) der Hinterräder (RP) des Rollstuhls (W), um die Vorderräder (RA) des Rollstuhls (W) angehoben zu halten;
- optional Einhaken einer Gegenformung (205, 304, 401) einer externen Zubehörvorrichtung (200, 300, 400) an der Einhakformung (71) des Einhakkörpers (7);
- eine zweite Konfiguration zum Befestigen der Hilfszugvorrichtung (1) an der Drehachse (X2) der Hinterräder (RP) des Rollstuhls (W), wobei die zweite Konfiguration Folgendes vorsieht:
- Drehen der Verbindungsbaugruppe (6) in eine Position, die im Wesentlichen mit der Trägerstruktur (2) ausgerichtet ist;
- Anordnen der Hilfszugvorrichtung (1) unterhalb der Drehachse (X2);
- Befestigen der Hilfszugvorrichtung (1) durch Zwischenschalten eines Halterungssystems (ST) an der Drehachse (X2) der Hinterräder (RP) des Rollstuhls (W);
- optional Einhaken einer Gegenformung (205, 304, 401) einer externen Zubehörvorrichtung (200, 300, 400) an der Einhakformung (71) des Einhakkörpers (7);
- eine dritte Konfiguration zum Befestigen der Hilfszugvorrichtung (1) an der Rückseite der Drehachse (X2) der Hinterräder (RP) des Rollstuhls (W), wobei die dritte Konfiguration Folgendes vorsieht:
- Drehen der Verbindungsbaugruppe (6) im Wesentlichen um 180° relativ zu der Trägerstruktur (2);
- Anordnen der Hilfszugvorrichtung (1) an der Rückseite der Drehachse (X2);
- Befestigen der Hilfszugvorrichtung (1) durch Zwischenschalten eines Halterungssystems (ST) an der Rückseite der Drehachse (X2) der Hinterräder (RP) des Rollstuhls (W);
- optional Einhaken einer Gegenformung (205, 304, 401) einer externen Zubehörvorrichtung (200, 300, 400) an der Einhakformung (71) des Einhakkörpers (7).

12. Befestigungsverfahren nach Anspruch 11, **dadurch gekennzeichnet, dass** die erste Befestigungskonfiguration ferner das Befestigen einer manuellen Lenkvorrichtung (200) an der Hilfszugvorrichtung (1) umfasst, wobei die manuelle Lenkvorrichtung (200) eine rohrförmige Säule (201) und eine Lenkeinheit (202) umfasst, die mit einem Lenkrohr (203) versehen ist, das drehbar in die rohrförmige Säule (201) eingesetzt ist, wobei das Lenkrohr (203) an einem ersten Ende (203a) davon mit einer Lenkstange (204) und an einem zweiten Ende (203b), das dem ersten Ende (203a) gegenüberliegt, mit einer Kupplungsgegenformung (205) versehen ist, die zu der Einhakformung (71) des Einhakkörpers (7) komplementär ist, wobei die rohrförmige Säule (201) mit den Befestigungsmitteln (206) versehen ist, die mit den zweiten Befestigungsmitteln (62) der Verbindungsbaugruppe (6) kompatibel sind; wobei das Befestigen die Kopplung der Gegenformung (205) und der Einhakformung (71) vorsieht, sodass die Lenkstange (204) mit der Trägerstruktur (2) und mit dem Antriebsrad (3) betriebswirksam zusammenwirkt, sowie das Befestigen der Befestigungsmittel (206) mit den zweiten Befestigungsmitteln (62), so dass die Hilfszugvorrichtung (1) einstückig mit der manuellen Lenkvorrichtung (200) gemacht wird.

13. Befestigungsverfahren nach Anspruch 11, **dadurch gekennzeichnet, dass** die erste Befestigungskonfiguration ferner das Befestigen einer Servolenkvorrichtung (300) an der Hilfszugvorrichtung (1) umfasst, wobei die Servolenkvorrichtung (300) ein Trägergehäuse (301) umfasst, in das ein mit einer Drehwelle (303) versehener elektrischer Lenkmotor (302) eingesetzt ist, wobei die Drehwelle (303) an ihrem freien Ende (303a) mit der Gegenformung (304) versehen ist, die zu der Einhakformung (71) des Einhakkörpers (7) komplementär ist, wobei das Trägergehäuse (301) mit den Befestigungsmitteln (305) versehen ist, die mit den zweiten Befestigungsmitteln (62) der Verbindungsbaugruppe (6) kompatibel sind; wobei das Befestigen vorsieht, die Gegenformung (304) mit der Einhakformung (71) zu koppeln, sodass die Drehwelle (303) betriebswirksam mit der Trägerstruktur (2) und mit dem Antriebsrad (3) zusammenwirkt, sowie das Befestigen der Befestigungsmittel (305) mit den zweiten Befestigungsmitteln (62), um die Hilfszugvorrichtung (1) einstückig mit der Servolenkvorrichtung (300) zu machen; wobei die erste Befestigungskonfiguration ferner vorsieht, eine Satellitensteuervorrichtung mit der Servolenkvorrichtung (300) und mit der Hilfszugvorrichtung (1) zu assoziieren, wobei die Satellitensteuervorrichtung so konfiguriert ist, dass ein Benutzer die Bewegung des elektrischen Lenkmotors (302) und die Bewegung des Antriebsrads (3) steuern kann.

14. Befestigungsverfahren nach Anspruch 11, **dadurch gekennzeichnet, dass** die zweite Befestigungskonfiguration ferner vorsieht, einen Klemmbügel (400) an der Hilfszugvorrichtung (1) zu befestigen, wobei in dem Klemmbügel (400) eine Gegenformung (401), die zu der Einhakformung (71) des Einhakkörpers (7) komplementär ist, einstückig definiert ist, und Befestigungsmittel (402), die mit den zweiten Befestigungsmitteln (62) der Verbindungsbaugruppe (6) kompatibel sind; wobei das Befestigen vorsieht, die Gegenformung (401) und die Einhakformung (71) zu koppeln und das Befestigen der Befestigungsmittel (402) an den zweiten Befestigungsmitteln (62), um die Drehung der Trägerstruktur (2) und des Antriebsrads (3) relativ zu der Verbindungsbaugruppe (6) zu verhindern.

15. Befestigungsverfahren nach Anspruch 11, **dadurch gekennzeichnet, dass** die dritte Befestigungskonfiguration ferner das Befestigen einer Servolenkvorrichtung (300) an der Hilfszugvorrichtung (1) umfasst, wobei die Servolenkvorrichtung (300) ein Trägergehäuse (301) umfasst, in das ein mit einer Drehwelle (303) versehener elektrischer Lenkmotor (302) eingesetzt ist, wobei die Drehwelle (303) an ihrem freien Ende (303a) mit der Gegenformung (304) versehen ist, die zu der Einhakformung (71) des Einhakkörpers (7) komplementär ist, wobei das Trägergehäuse (301) mit den Befestigungsmitteln (305) versehen ist, die mit den zweiten Befestigungsmitteln (62) der Verbindungsbaugruppe (6) kompatibel sind; wobei das Befestigen vorsieht, die Gegenformung (304) mit der Einhakformung (71) zu koppeln, sodass die Drehwelle (303) betriebswirksam mit der Trägerstruktur (2) und mit dem Antriebsrad (3) zusammenwirkt, und die Befestigungsmittel (305) mit den zweiten Befestigungsmitteln (62) zu befestigen, um die Hilfszugvorrichtung (1) einstückig mit der Servolenkvorrichtung (300) zu machen; wobei die erste Befestigungskonfiguration ferner vorsieht, eine Satellitensteuervorrichtung mit der Servolenkvorrichtung (300) und mit der Hilfszugvorrichtung (1) zu assoziieren, wobei die Satellitensteuervorrichtung so konfiguriert ist, dass ein Benutzer die Bewegung des elektrischen Lenkmotors (302) und die Bewegung des Antriebsrads (3) steuern kann.

## Revendications

1. Dispositif auxiliaire de traction (1) pour fauteuils roulants (W) comprenant:
- une structure de support (2) à laquelle une roue motrice (3) est couplée de manière rotative afin de définir un axe de rotation (X) de ladite roue motrice (3), ladite structure de support (2) ayant deux parties latérales (21, 22) disposées sur les côtés opposés de ladite roue motrice, reliées l'une à l'autre par une portion avant (23) et une portion arrière (24);
- ladite roue motrice (3) du type comprenant une roue (31) reliée de manière opérationnelle à un moteur électrique (32);
- une unité de commande électronique (4) configurée pour commander ledit moteur électrique (32), ladite unité de commande électronique (4) étant disposée dans un premier boîtier (21a) défini dans une première partie latérale (21) desdites parties latérales (21, 22);
- des moyens de stockage d'énergie électrique (5) configurés pour alimenter ladite roue motrice (3) et ladite unité de commande électronique (4), lesdits moyens de stockage d'énergie électrique (5) étant disposés dans un second boîtier (22b) défini dans la deuxième partie latérale (22) desdites parties latérales (21, 22);
- un ensemble de connexion (6) ayant un profil allongé et associé en rotation à ladite structure de support (2) à une extrémité distale (6a) de celle-ci de manière à définir un axe de direction (Y) de ladite structure de support (2) et de ladite roue motrice (3) par rapport audit ensemble de connexion (6), ladite association rotative étant de type libre, ledit axe de direction (Y) étant défini comme orthogonal et décalé par rapport audit axe de rotation (X), ledit ensemble de connexion (6) comprenant des premiers moyens de fixation (61) définis dans la deuxième extrémité dudit ensemble de connexion (6) pour connecter ledit dispositif auxiliaire de traction (1) au châssis d'un fauteuil roulant (W), ledit ensemble de connexion (6) comprenant en outre des seconds moyens de fixation (62) pour fixer ledit dispositif auxiliaire de traction (1) à un dispositif accessoire externe (200, 300, 400);
**caractérisé en ce qu'il** comprend:
- un corps d'accrochage (7) défini coaxialement avec ledit axe de direction (Y), couplé de manière rotative audit ensemble de connexion (6) et relié intégralement à une première extrémité (7a) de celui-ci à ladite structure de support (2), ledit corps d'accrochage (7) étant pourvu à sa deuxième extrémité (7b), opposée à ladite première extrémité (7a), d'une forme d'accrochage (71) qui présente un profil polygonal en retrait afin de permettre l'accrochage opérationnel dudit dispositif accessoire externe (200, 300, 400) pourvu d'une contre-forme (205, 304, 401) complémentaire à ladite forme d'accrochage (71).

2. Dispositif auxiliaire de traction (1) selon la revendication 1, **caractérisé en ce que** cette association de type libre permet audit ensemble de connexion (6) de tourner sensiblement d'un angle de 360° par rapport à ladite structure de support (2).

3. Dispositif auxiliaire de traction (1) selon l'une quelconque des revendications précédentes, **caractérisé en ce que** ledit profil allongé dudit ensemble de connexion (6) est un profil curviligne avec un angle de courbure correspondant sensiblement à l'angle de courbure de ladite roue (31), de sorte que, lorsque ledit ensemble de connexion (6) est tourné dans une position sensiblement alignée avec ladite structure de support (2), ledit profil allongé suit sensiblement une partie du profil de ladite roue (31).

4. Dispositif auxiliaire de traction (1) selon l'une quelconque des revendications précédentes, **caractérisé en ce que** ledit corps d'accrochage (7) comprend un corps d'accrochage cylindrique (72) solidaire de ladite première extrémité (7a) à ladite structure de support (2) de sorte que ledit corps d'accrochage cylindrique (72) est coaxial audit axe de direction (Y), ledit corps d'accrochage cylindrique (72) étant couplé en rotation audit ensemble de connexion (6) par l'interposition d'au moins un palier mécanique (73).

5. Dispositif auxiliaire de traction (1) selon la revendication 4, **caractérisé en ce que** ledit corps d'accrochage cylindrique (72) est sensiblement inséré dans ledit ensemble de connexion (6).

6. Dispositif auxiliaire de traction (1) selon l'une quelconque des revendications 4 ou 5, **caractérisé en ce que** ledit corps d'accrochage cylindrique (72) présente un trou traversant (74) défini axialement depuis le fond (71a) de ladite forme d'accrochage (71) jusqu'à ladite première extrémité (7a), ladite structure de support (2) étant pourvue, sous ladite première extrémité (7a) dudit corps d'accrochage cylindrique (72), d'un ensemble de levier (8) configuré pour actionner un système de freinage (9) associé à ladite roue (31), ledit ensemble de levier (8) étant configuré pour être engagé à travers ledit trou traversant (74).

7. Dispositif auxiliaire de traction (1) selon l'une quelconque des revendications précédentes, **caractérisé en ce que** lesdits premiers moyens de fixation (61), lorsque ledit ensemble de connexion (6) est tourné dans une position sensiblement alignée avec ladite structure de support (2), sont configurés pour fixer ledit dispositif auxiliaire de traction (1) à l'avant de l'axe de rotation (X2) des roues arrière (RP) dudit fauteuil roulant (W) au moyen d'un bras de connexion (BC) de manière à maintenir les roues avant (RA) dudit fauteuil roulant (W) soulevées, et sont configurés pour fixer ledit dispositif auxiliaire de traction (1), par interposition d'un système d'accrochage (ST), à l'axe de rotation (X2) desdites roues arrière (RP) dudit fauteuil roulant (W); lesdits premiers moyens de fixation (61), lorsque ledit ensemble de connexion (6) est sensiblement tourné de 180° par rapport à ladite structure de support (2), sont configurés pour fixer ledit dispositif auxiliaire de traction (1), par interposition d'un système d'accrochage (ST), à l'arrière de l'axe de rotation (X2) desdites roues arrière (RP) dudit fauteuil roulant (W).

8. Système auxiliaire de traction (100, 101, 102, 103) **caractérisé en ce qu'il** comprend:
- un dispositif auxiliaire de traction (1) selon l'une quelconque des revendications précédentes;
- un ou plusieurs dispositifs accessoires externes (200, 300, 400), chacun pourvu d'une contre-forme (205, 304, 401) complémentaire à ladite forme d'accrochage (71) dudit corps d'accrochage (7) et de moyens de fixation (206, 305, 402) compatibles avec lesdits seconds moyens de fixation (62) dudit ensemble de connexion (6), ladite contre-forme (205, 304, 401) et ladite forme d'accrochage (71) étant couplées l'une à l'autre de façon à faire coopérer de manière opérationnelle ledit dispositif accessoire externe (200, 300, 400) avec ladite structure de support (2) et avec ladite roue motrice (3) dudit dispositif auxiliaire de traction (1), lesdits moyens de fixation (206, 305, 402) étant fixés auxdits seconds moyens de fixation (62) dudit ensemble de connexion (6) de manière à rendre ledit dispositif auxiliaire de traction (1) solidaire dudit dispositif accessoire externe (200, 300, 400); ledit un ou plusieurs dispositifs accessoires externe (200, 300, 400) étant:
- un dispositif de direction manuelle (200) comprenant une colonne tubulaire (201) et une unité de direction (202) pourvue d'un tube de direction (203) inséré de manière rotative dans ladite colonne tubulaire (201), ledit tube de direction (203) étant pourvu à l'une de ses premières extrémités (203a) d'un guidon (204) et à la deuxième extrémité (203b) opposée à ladite première extrémité (203a), de ladite contre-forme de couplage (205), ladite contre-forme (205) et ladite forme d'accrochage (71) étant couplées l'une à l'autre de manière à ce que ledit guidon (204) coopère de manière opérationnelle avec ladite structure de support (2) et avec ladite roue motrice (3), ladite colonne tubulaire (201) étant pourvue desdits moyens de fixation (206), de manière à rendre ledit dispositif auxiliaire de traction (1) solidaire dudit dispositif de direction manuelle (200), ledit dispositif auxiliaire de traction (1) étant fixé à l'avant à l'axe de rotation (X2) desdites roues arrière (RP) dudit fauteuil roulant (W) au moyen desdits premiers moyens de fixation (61), lorsque ledit ensemble de connexion (6) est tourné dans une position sensiblement alignée avec ladite structure de support (2), et au moyen d'un bras de connexion (BC), de manière à maintenir les roues avant (RA) dudit fauteuil roulant (W) soulevées;
- un dispositif de direction assistée (300) comprenant un boîtier de support (301) dans lequel est inséré un moteur de direction électrique (302) muni d'un arbre de rotation (303), ledit arbre de rotation (303) étant muni à son extrémité libre (303a) de ladite contre-forme (304), ladite contre-forme (304) et ladite forme d'accrochage (71) étant couplées l'une à l'autre de manière à faire coopérer opérationnellement ledit arbre de rotation (303) avec ladite structure de support (2) et avec ladite roue motrice (3), ledit boîtier de support (301) étant pourvu desdits moyens de fixation (305) de manière à rendre ledit dispositif auxiliaire de traction (1) solidaire dudit dispositif de direction assistée (300), ledit système auxiliaire de traction (101, 102) comprenant en outre un dispositif de commande par satellite configuré de manière à ce qu'un utilisateur puisse contrôler le mouvement dudit moteur de direction électrique (302); ledit dispositif auxiliaire de traction (1) étant fixé, à l'avant, à l'axe de rotation (X2) des roues arrière (RP) dudit fauteuil roulant (W) au moyen desdits premiers moyens de fixation (61), lorsque ledit ensemble de connexion (6) est tourné vers une position sensiblement alignée avec ladite structure de support (2), et au moyen d'un bras de connexion (BC) de manière à maintenir les roues avant (RA) dudit fauteuil roulant (W) soulevées, où ledit dispositif auxiliaire de traction (1) étant fixé à l'arrière à l'axe de rotation (X2) desdites roues arrière (RP) dudit fauteuil roulant (W) au moyen desdits premiers moyens de fixation (61), lorsque ledit ensemble de connexion (6) est tourné sensiblement de 180° par rapport à ladite structure de support (2), et au moyen de l'interposition d'un système d'accrochage (ST);
- un support de serrage (400) dans lequel ladite contre-forme (401) et lesdits moyens de fixation (402) sont définis intégralement, ladite contre-forme (401) et ladite forme d'accrochage (71) étant couplées l'une à l'autre et lesdits moyens de fixation (402) étant fixés audits seconds moyens de fixation (62) de manière à empêcher la rotation de ladite structure de support (2) et de ladite roue motrice (3) par rapport audit ensemble de connexion (6), ledit dispositif auxiliaire de traction (1) étant fixé à l'axe de rotation (X2) des roues arrière (RP) dudit fauteuil roulant (W) au moyen desdits premiers moyens de fixation (61), lorsque ledit ensemble de connexion (6) est tourné dans une position sensiblement alignée avec ladite structure de support (2), et en interposant un système de fixation (ST).

9. Système auxiliaire de traction (100) selon la revendication 8, **caractérisé en ce que** ledit dispositif de direction manuelle (200) comprend, interposé entre ledit tube de direction (203) et ladite contre-forme (205), un joint de cardan (207).

10. Système auxiliaire de traction (100) selon l'une quelconque des revendications 8 ou 9 en combinaison avec la revendication 6, **caractérisé en ce que** ladite contre-forme (205) comprend un trou traversant (208) en communication avec ledit trou traversant (74) dudit corps d'accrochage cylindrique (72), ledit dispositif de direction manuelle (200) étant pourvu d'un système de levier (209) relié au niveau dudit guidon (204) à un levier de manœuvre (210), configuré pour être actionné par un utilisateur et, à l'extrémité opposée, ledit système de levier (209) traversant ledit trou traversant (208) de ladite contre-forme (205) et ledit trou traversant (74) dudit corps d'accrochage cylindrique (72) dudit dispositif auxiliaire de traction (1), ledit système de levier (209) étant configuré pour engager ledit ensemble de levier (8) dudit dispositif auxiliaire de traction (1) lorsque ledit levier de manœuvre (210) est actionné, de manière à activer ledit système de freinage (9).

11. Procédé de fixation d'un dispositif auxiliaire de traction (1) selon l'une quelconque des revendications 1 à 7 à un fauteuil roulant (W), **caractérisé en ce qu'il** offre alternativement trois configurations de fixation:
- une première configuration pour fixer ledit dispositif auxiliaire de traction (1) à l'avant de l'axe de rotation (X2) des roues arrière (RP) dudit fauteuil roulant (W), ladite première configuration prévoyant de:
- faire pivoter ledit ensemble de connexion (6) jusqu'à une position sensiblement alignée avec ladite structure de support (2);
- disposer ledit dispositif auxiliaire de traction (1) à l'avant dudit fauteuil roulant (W);
- fixer, au moyen desdits premiers moyens de fixation (61) et d'un bras de connexion (BC), ledit dispositif auxiliaire de traction (1) audit axe de rotation (X2) desdites roues arrière (RP) dudit fauteuil roulant (W), de manière à maintenir les roues avant (RA) dudit fauteuil roulant (W) soulevées;
- accrocher éventuellement une contre-forme (205, 304, 401) d'un dispositif accessoire externe (200, 300, 400) à ladite forme d'accrochage (71) dudit corps d'accrochage (7);
- une deuxième configuration pour fixer ledit dispositif auxiliaire de traction (1) à l'axe de rotation (X2) desdites roues arrière (RP) dudit fauteuil roulant (W), ladite deuxième configuration prévoyant de:
- faire pivoter ledit ensemble de connexion (6) jusqu'à une position sensiblement alignée avec ladite structure de support (2);
- disposer ledit dispositif auxiliaire de traction (1) sous ledit axe de rotation (X2);
- fixer ledit dispositif auxiliaire de traction (1), en interposant un système de fixation (ST), au niveau dudit axe de rotation (X2) desdites roues arrière (RP) dudit fauteuil roulant (W);
- accrocher éventuellement une contre-forme (205, 304, 401) d'un dispositif accessoire externe (200, 300, 400) à ladite forme d'accrochage (71) dudit corps d'accrochage (7);
- une troisième configuration pour fixer ledit dispositif auxiliaire de traction (1) à l'arrière de l'axe de rotation (X2) des roues arrière (RP) dudit fauteuil roulant (W), ladite troisième configuration prévoyant de:
- faire pivoter ledit ensemble de connexion (6) d'environ 180° par rapport à ladite structure de support (2);
- disposer ledit dispositif auxiliaire de traction (1) à l'arrière dudit axe de rotation (X2);
- fixer ledit dispositif auxiliaire de traction (1), en interposant un système de fixation (ST), à l'arrière de l'axe de rotation (X2) desdites roues arrière (RP) dudit fauteuil roulant (W);
- accrocher éventuellement une contre-forme (205, 304, 401) d'un dispositif accessoire externe (200, 300, 400) à ladite forme d'accrochage (71) dudit corps d'accrochage (7).

12. Procédé de fixation selon la revendication 11, **caractérisé en ce que** ladite première configuration de fixation comprend en outre la fixation d'un dispositif de direction manuelle (200) audit dispositif auxiliaire de traction (1), dans lequel ledit dispositif de direction manuelle (200) comprend une colonne tubulaire (201) et une unité de direction (202) pourvue d'un tube de direction (203) inséré de manière rotative dans ladite colonne tubulaire (201), ledit tube de direction (203) étant pourvu à sa première extrémité (203a) d'un guidon (204) et à sa deuxième extrémité (203b), opposée à ladite première extrémité (203a), d'une contre-forme d'accouplement (205) complémentaire à ladite forme d'accrochage (71) dudit corps d'accrochage (7), ladite colonne tubulaire (201) étant pourvue desdits moyens de fixation (206) compatibles avec lesdits seconds moyens de fixation (62) dudit ensemble de connexion (6); ladite fixation permettant de coupler ladite contre-forme (205) et ladite forme d'accrochage (71), de manière à faire coopérer opérationnellement ledit guidon (204) avec ladite structure de support (2) et avec ladite roue motrice (3), et de fixer lesdits moyens de fixation (206) avec lesdits seconds moyens de fixation (62), de manière à rendre ledit dispositif auxiliaire de traction (1) solidaire dudit dispositif de direction manuelle (200).

13. Procédé de fixation selon la revendication 11, **caractérisé en ce que** ladite première configuration de fixation comprend en outre la fixation d'un dispositif de direction assistée (300) audit dispositif auxiliaire de traction (1), dans lequel ledit dispositif de direction assistée (300) comprend un boîtier de support (301) dans lequel est inséré un moteur de direction électrique (302) muni d'un arbre de rotation (303), ledit arbre de rotation (303) étant pourvu, à son extrémité libre (303a), de ladite contre-forme (304) complémentaire à ladite forme d'accrochage (71) dudit corps d'accrochage (7), ledit boîtier de support (301) étant pourvu desdits moyens de fixation (305) compatibles avec lesdits seconds moyens de fixation (62) dudit ensemble de connexion (6); ladite fixation permettant de coupler ladite contre-forme (304) à ladite forme d'accrochage (71), de manière à faire coopérer opérationnellement ledit arbre de rotation (303) avec ladite structure de support (2) et avec ladite roue motrice (3), et de fixer lesdits moyens de fixation (305) avec lesdits seconds moyens de fixation (62), de manière à rendre ledit dispositif auxiliaire de traction (1) solidaire dudit dispositif de direction assistée (300); ladite première configuration de fixation prévoit en outre d'associer un dispositif de commande par satellite audit dispositif de direction assistée (300) et audit dispositif auxiliaire de traction (1), ledit dispositif de commande par satellite étant configuré de manière à ce qu'un utilisateur puisse contrôler le mouvement dudit moteur de direction électrique (302) et le mouvement de ladite roue motrice (3).

14. Procédé de fixation selon la revendication 11, **caractérisé en ce que** ladite deuxième configuration de fixation prévoit en outre de fixer un support de serrage (400) audit dispositif auxiliaire de traction (1), dans lequel dans ledit support de serrage (400) est intégralement définie une contre-forme (401) complémentaire à ladite forme d'accrochage (71) dudit corps d'accrochage (7), et des moyens de fixation (402) compatibles avec lesdits seconds moyens de fixation (62) dudit ensemble de connexion (6); ladite fixation permettant de coupler ladite contre-forme (401) et ladite forme d'accrochage (71) et de fixer lesdits moyens de fixation (402) auxdits seconds moyens de fixation (62) de manière à empêcher la rotation de ladite structure de support (2) et de ladite roue motrice (3) par rapport audit ensemble de connexion (6).

15. Procédé de fixation selon la revendication 11, **caractérisé en ce que** ladite troisième configuration de fixation comprend en outre la fixation d'un dispositif de direction assistée (300) audit dispositif auxiliaire de traction (1), dans lequel ledit dispositif de direction assistée (300) comprend un boîtier de support (301) dans lequel est inséré un moteur de direction électrique (302) muni d'un arbre de rotation (303), ledit arbre de rotation (303) étant pourvu, à son extrémité libre (303a), de ladite contre-forme (304) complémentaire à ladite forme d'accrochage (71) dudit corps d'accrochage (7), ledit boîtier de support (301) étant pourvu desdits moyens de fixation (305) compatibles avec lesdits seconds moyens de fixation (62) dudit ensemble de connexion (6); ladite fixation permettant de coupler ladite contre-forme (304) à ladite forme d'accrochage (71), de manière à faire coopérer opérationnellement ledit arbre de rotation (303) avec ladite structure de support (2) et avec ladite roue motrice (3), et de fixer lesdits moyens de fixation (305) avec lesdits seconds moyens de fixation (62), de manière à rendre ledit dispositif auxiliaire de traction (1) solidaire dudit dispositif de direction assistée (300); ladite première configuration de fixation prévoit en outre d'associer un dispositif de commande par satellite audit dispositif de direction assistée (300) et audit dispositif auxiliaire de traction (1), ledit dispositif de commande par satellite étant configuré de manière à ce qu'un utilisateur puisse contrôler le mouvement dudit moteur de direction électrique (302) et le mouvement de ladite roue motrice (3).
